# FASCICULE DE BREVET EUROPEEN

(11) **EP 2 595 784 B1**
(45) Date de publication et mention de la délivrance du brevet: **06.04.2016**
(21) Numéro de dépôt: 11749468.2
(22) Date de dépôt: 19.07.2011
(51) Int. Cl.: B29B 17/02

(54) **PRÉ-CONCENTRATION ET PRÉSÉLECTION SIMULTANÉE D'AU MOINS UN GROUPE DE MATÉRIAUX POLYMÈRES VALORISABLES PROVENANT DE DÉCHETS DE BROYAGE DE BIENS DURABLES EN FIN DE VIE**
SIMULTANE VORKONZENTRATION UND VORAUSWAHL VON ZUMINDEST EINER GRUPPE AN AUFWERTBAREN POLYMERMATERIALIEN AUS ZERKLEINERUNGSRESTEN LANGLEBIGER GÜTER AM ENDE IHRER LEBENSDAUER
SIMULTANEOUS PRECONCENTRATION AND PRESELECTION OF AT LEAST ONE GROUP OF UPGRADABLE POLYMER MATERIALS ORIGINATING FROM GRINDING WASTE OF DURABLE GOODS AT END OF LIFE

(30) Priorité: 19.07.2010 FR 1003023
(43) Date de publication de la demande: 29.05.2013
(73) Titulaire: Galloo Plastics, 59250 Halluin (FR)
(72) Inventeur: DE FERAUDY Hugues, F-69220 CHARANTAY (FR); SEINERA Henri, F-69600 Oullins (FR)
(74) Mandataire: Fidal Innovation
(86) Numéro de dépôt international: PCT/FR2011/000422
(87) Numéro de publication internationale: WO 2012/017139

(56) Documents cités:
- WO-A1-98/03318
- WO-A1-2005/077630
- FR-A1- 2 773 736
- FR-A1- 2 860 994

## Description

### Domaine de l'invention

L'invention concerne un procédé de pré-concentration et de présélection simultanées d'au moins un groupe de matériaux polymères usagés de compositions diverses, en mélange entre eux et avec des matériaux contaminants, provenant de la destruction par broyage de biens de consommation durables parvenus en fin de vie, recyclables dans les domaines de la plasturgie.

Se pose aux industries de recyclage de matériaux polymères usagés provenant de la destruction par broyage de biens de consommation durables en fin de vie, un problème important qui est :
- la faible concentration de ces matériaux polymères usagés et valorisables dans le flux des matériaux à traiter provenant du broyage destructif dont il est souhaitable d'améliorer cette concentration pour rendre maximale leur valorisation
- et leur grande diversité de nature et de composition telles que par exemple, des polyoléfines, des polyamides, des polychlorures de vinyles et autres, chargées ou non chargées

Les équipements de triage des déchets industriels sont techniquement spécialisés et adaptés au traitement d'un type de déchets particuliers comme par exemple les polymères usagés valorisables, à extraire des résidus de broyage de biens de consommation durables en fin de vie, comme des automobiles, le matériel électroménager d'autres origines dont les métaux ont déjà été extraits pour l'essentiel mais qui dans cette autre étape doivent être séparés de matériaux contaminants en grande quantité. C'est pourquoi les équipements de tri de déchets ne peuvent être efficaces qu'à la condition d'être alimentés par un flux de déchets qui leur soit adapté.

Les équipements de triage des déchets industriels comme les matériaux polymères usagés, provenant de la destruction par broyage de biens de consommation durables en fin de vie, ne sont pas toujours (directement) installés sur le site de destruction par broyage desdits biens et il apparaît, dès lors, économiquement nécessaire, d'enrichir le plus possible en matériaux usagés valorisables les déchets à transporter du site de destruction jusqu'au site de valorisation.

Afin d'améliorer la valorisation des déchets et de la rendre maximale, il est nécessaire d'alimenter les équipements de triage spécialisés pour un type de déchet, avec des flux à traiter déjà pré-concentrés en matériaux à valoriser.

Cette étape de pré-concentration des déchets a, dès lors, au moins deux objectifs dont :
✔ l'un est de séparer des déchets afin de les orienter vers les moyens de traitement spécialisés,
✔ et l'autre est de pré-concentrer un flux de déchets à traiter chargé de matériaux valorisables afin d'améliorer le rendement global de la chaîne de traitement des déchets en augmentant le ratio « masse de produits triés à valoriser par rapport à la masse totale de produits entrant dans la chaîne de traitement de déchets ».

Toutefois, il apparaît dans l'exploitation de ces déchets que la pré-concentration seule est insuffisante en soi et qu'il faut simultanément pendant cette opération de pré-concentration, effectuer une présélection par regroupement des matériaux polymères usagés à valoriser pour créer des flux spécifiques de matériaux usagés valorisables accompagnés de matériaux contaminants, non seulement beaucoup plus concentrés en polymères usagés valorisables, mais également spécifiques par les types de polymères usagés présélectionnés par regroupement permettant à la fois de simplifier les équipements de valorisation de chaque type de polymère et de les rendre plus économique et de récupérer la quasi-totalité des polymères présents dans lesdits déchets en préservant encore mieux l'environnement par une diminution drastique des rejets en décharge.

C'est pourquoi l'invention concerne un procédé de pré-concentration et de présélection simultanées d'une fraction de matériaux polymères de synthèse à valoriser à partir de résidus issus de la destruction de biens durables arrivés en fin de vie, ces résidus contenant des matériaux organiques de synthèse valorisables et d'autres matériaux dont certains sont également valorisables et les autres constituant des matériaux contaminants non valorisables à éliminer définitivement.

Plus particulièrement, l'invention concerne un procédé permettant simultanément d'extraire tous les matériaux polymères de synthèse dans un état solide ou expansé de quelque composition que ce soit, et de pré-sélectionner parmi tous ces matériaux polymères au moins un groupe de polymères particuliers présents dans un flux de résidus contenant d'autres matériaux considérés comme des matériaux contaminants tels que métaux, minéraux et autres contaminants, afin d'arriver à un taux de concentration en poids de matériaux polymères de synthèse dans le groupe présélectionné simultanément d'au moins 60%, de préférence d'au moins 85%, et très préférentiellement d'au moins 90%. Ces matériaux pré-concentrés et présélectionnés simultanément sont destinés à être soumis par la suite à un autre traitement de séparation très fine et de sélection dans le but de récupérer différentes fractions de matériaux polymères de synthèse homogènes, de même qu'une fraction de polymères mousse extraite.

Les flux sur lesquels s'applique le procédé de l'invention proviennent généralement de résidus de broyage automobile et d'autres biens de consommation durables tels que matériel électroménager, matériel informatique, arrivés en fin de vie, pour lesquels une multiplicité de types de matériaux polymères de synthèse sont à considérer être valorisables et pour lesquels une multiplicité d'autres matériaux sont considérés comme des contaminants gênants tels que métaux, minéraux et matériaux contaminants divers dont plus particulièrement, du verre, du bois, des caoutchoucs, du sable, et doivent être éliminés. D'autres déchets, tels que des déchets industriels mélangés contenant des matériaux polymères de synthèse et des déchets d'emballage en provenance de collectes municipales et contenant également des matériaux polymères valorisables mélangés peuvent être tout autant considérés comme potentiellement valorisables.

### Etat de la technique :

Le problème important posé aux industries du recyclage connu depuis quelques années déjà, a fait l'objet de recherches industrielles relativement nombreuses dont quelques cas ont été sélectionnés pour établir l'état de la technique du domaine de l'invention, mais ne semble pas avoir trouvé une solution quant à réaliser simultanément deux objets importants que sont la pré-concentration et la présélection selon des groupes de matériaux polymères usagés valorisables en mélange entre eux et avec des matériaux contaminants dans les déchets provenant de la destruction par broyage de biens de consommation durables en fin de vie.

Un premier document (US 6,024,226) décrit une technologie et un procédé qui permettent de séparer et recueillir en continu des matériaux issus de mélanges de particules solides hétérogènes provenant essentiellement des déchets solides en utilisant une pluralité de cellules de séparation, chaque cellule étant remplie d'un liquide de densité particulière et différente des autres cellules.

Une première cellule de séparation reçoit le flux de matériaux hétérogènes à trier qui est mis en contact avec un premier liquide-support de densité d'environ 1,0 permettant à une première fraction de matériaux à séparer de flotter dans le liquide-support en formant une fraction légère alors que la fraction restante de densité supérieure coule en formant une fraction lourde. Cette fraction lourde est reprise et introduite dans une deuxième cellule de séparation dont le milieu liquide-support a une densité différente de celle de la première cellule, entraînant de ce fait une nouvelle séparation en fractions légères et fractions lourdes.

Le procédé ainsi évoqué apparaît être surtout adapté au traitement de fractions métalliques en vue de récupérer les non ferreux, ainsi qu'au traitement des fractions organiques de synthèse éventuellement purifiées quant à leur teneur en matériaux organiques de synthèse lourds - essentiellement les chlorés - pour une valorisation thermique moins polluante.

Un autre document (FR 2860994) décrit une procédé de séparation sélective de matériaux organiques de synthèse en mélange.

Un autre document (WO 98/01276) décrit un procédé et un dispositif pour le traitement des déchets de matières polymères de synthèse mélangées. Les particules qui excèdent un poids particulier ou une densité particulière (décrite comme fraction lourde) sont séparées préalablement des déchets plus légers tels que films et papiers qui sont aspirés et gérés différemment. Selon ce brevet, la fraction lourde de polymères thermoplastiques rigides en mélange, est broyée dans deux types de broyeurs, puis tamisée à des dimensions fines de quelques millimètres, puis séparée par criblage et triée par des moyens tels que aspiration et/ou séparation par charge électrostatiques. À cette fin, le dispositif de traitement comporte une étape de broyage, une étape de tamisage et/ou une étape de séparation électrostatique. Les flux de matériaux concernés à traiter sont essentiellement des déchets d'emballage plastiques plus ou moins contaminés, dont il s'agit d'extraire une fraction en vue d'une valorisation thermique. Le broyage fin et le criblage permettent de réduire la teneur en matériaux chlorés et inorganiques.

Le brevet EP 1 534 487 décrit un procédé de pré-concentration de matériaux polymères valorisables issus d'un résidu de broyage d'articles consommables en fin de vie, tels que automobiles, matériel informatique, matériel électroménager, ou autres, qui consiste à traiter le résidu par des étapes successives comportant criblage, séparation aéraulique, broyage et ultime séparation aéraulique, pour en éliminer majoritairement les matériaux contaminants tels que métaux, verre, caoutchouc, sable ou autres et obtenir une fraction pré-concentrée en matériaux polymères valorisables par recyclage.

Toutefois, ce procédé de pré-concentration est limité à cette seule fonction de l'augmentation de la teneur en matériaux polymères usagés valorisables de diverse nature et de diverses compositions dans un flux de déchets par élimination partielle des divers contaminants présents pour diminuer par exemple les volumes transportés et faciliter le tri final lors des l'opérations de séparation sélective pour la valorisation.

Dès lors, le flux résultant de ce procédé formé majoritairement des matériaux polymères usagés valorisables en mélange avec des matériaux contaminants en faible teneur alimente un procédé de valorisation rendu complexe car non seulement ce procédé doit éliminer tous les matériaux contaminants restants mais il doit encore séparer chaque type de polymère, selon sa famille d'origine, selon qu'il contient des charges ou non, selon son état physique de matériau dense ou de matériau sous forme de mousse, c'est-à-dire son facteur de forme et selon de nombreux autres critères encore.

Ainsi l'état de la technique peut proposer au moins un procédé d'enrichissement en matériaux polymères usagés valorisables a partir de flux de déchets de compositions extrêmement diverses contenant lesdits polymères, qui se limite à cette seule pré-concentration, qui livre un flux de déchets très appauvris en matériaux contaminants et très enrichis en polymères usagés valorisables mais sans qu'il y ait lors de cette pré-concentration un regroupement de ces polymères usagés selon des critères appropriés c'est-à-dire qu'il y ait un début d'amorce de sélection entre ces divers polymères usagés à valoriser.

### Objectifs de l'invention

De nombreux objectifs sont dès lors assignés à l'objet de l'invention, de telle sorte que l'essentiel au moins des inconvénients perceptibles dans l'état de la technique en soit éliminé et que le problème observé soit résolu.

Un premier objet de l'invention est de créer un procédé et son installation industrielle correspondante permettant de réaliser simultanément une pré-concentration et une présélection de matériaux polymères de synthèse valorisables de tous types présents dans le flux complexe de matériaux issus du broyage de biens de consommation durable en fin de vie, tels que véhicules automobiles, électroménager, articles électriques et/ou électroniques après un premier traitement rustique, par leur séparation d'avec les autres matériaux contaminants tels que des matériaux polymères expansés, des matériaux métalliques, des matériaux minéraux comme par exemple du sable, du verre, des matériaux organiques naturels tels que le bois par exemple.

Un autre objet de l'invention est de créer un procédé et une installation industrielle correspondante qui permettent de produire, à partir du flux complexe formé de déchets issus du broyage de biens de consommation durables, tels qu'évoqués précédemment, un pré-concentré des seuls matériaux polymères valorisables à caractère compact, c'est-à-dire exempt de matériaux polymères expansés à cellules ouvertes ou fermées, dont la concentration en matériaux polymères compacts valorisables au terme du traitement par le procédé est porté à au moins 60% en poids et préférentiellement à au moins 80% en poids, ce pré-concentré pouvant être traité ensuite de façon efficace dans des installations ou par des technologies appropriées de sélection pour en extraire des matériaux polymères homogènes ayant des degrés de pureté proches des matériaux polymères vierges et ce, pour chaque famille de matériaux polymères présents dans ledit flux.

Un autre objet de l'invention est de créer un procédé et une installation industrielle correspondante qui réalise simultanément :
- une pré-concentration des seuls matériaux polymères valorisables à caractère compact présents dans le flux complexe de matériaux issus du broyage de biens de consommation durables en fin de vie et
- une présélection de ces matériaux polymères usagés valorisables par création de groupes de polymères à partir de critères de regroupement basés sur des intervalles de densité minimale et maximale délimitant chaque groupe créé de polymères usagés valorisables.

### Description brève de l'invention

Selon les divers objets de l'invention précédemment énoncés, le procédé de traitement de mélange de matériaux fragmentés composé de matériaux polymères usagés valorisables en faible quantité et de matériaux contaminants issus du broyage de biens de consommation durables en fin de vie, tels que des véhicules automobiles, l'électroménager, le matériel électronique et autre diminue les inconvénients manifestés lors de l'examen de l'état de la technique et apporte, de substantielles améliorations dans les moyens de l'état de la technique et solutions aux problèmes industriels posés.

Selon l'invention, le procédé de traitement consistant simultanément en :
* la pré-concentration d'un mélange en matériaux polymères usagés recyclables dans les domaines de la plasturgie par élimination partielle des matériaux contaminants présents dans le mélange et
* la présélection dans le mélange d'au moins un groupe de matériaux polymères usagés valorisables délimité par un intervalle de densité] d ₘᵢₙᵢ - d ₘₐₓᵢ] se situant à l'intérieur d'un intervalle de densité délimité par les bornes ] 0,850 - 1,900 ] du mélange de matériaux fragmentés issus du résidu de broyage de biens de consommation durable en fin de vie comprenant :
   ✔ une fraction de matériaux valorisables qui sont des matériaux polymères de synthèse, de nature et/ou de compositions et/ou de facteurs de forme divers dont les densités se situent dans l'intervalle ] 0,850 - 1,900 ],
   ✔ des fractions de matériaux contaminants à éliminer formés de matériaux minéraux et/ou de matériaux métalliques et/ou de matériaux organiques autres que des matériaux polymères et/ou des matériaux polymères de synthèse dans un état expansé, en particulier les mousses.
se caractérise en ce qu'il comporte dans l'ordre :
a) une étape de séparation dans un milieu hydraulique dont la densité est réglée à une valeur dₛ choisie dans un intervalle de densité, borne inférieure exclue défini par ] 1,100 - 1,900 ], dₛ constituant la limite de densité supérieure « d maxi » choisie pour un groupe de polymères usagés valorisables à présélectionner, alors que la limite de densité inférieure dₘᵢₙᵢ dudit groupe est comprise dans l'interballe ] 0,850 - dₛ ], milieu hydraulique dans lequel est introduit le mélange de matériaux polymères usagés à valoriser et des matériaux contaminants, qui se sépare en une fraction surnageante (a1) de densité maximale dₛ et une fraction décantante (a2), contenant des matériaux polymères usagés à valoriser formant un groupe de polymères usagés valorisables de densités supérieures à dₛ pré-concentrés et pré-sélectionnés et au moins pour partie la fraction des matériaux contaminants du mélange des matériaux fragmentés, extraite hors du procédé
b) une étape de séparation de la fraction surnageante (a1) venant de l'étape a) dans un milieu hydraulique dont la densité est réglée à une valeur de 1,100 donnant une fraction surnageante (b1) de densité au plus égale à 1,100 qui consiste en une fraction de matériaux polymères de synthèse usagés ultra légers et/ou expansés et des matériaux polymères de synthèse usagés à valoriser se présentant sous une forme fragmentée ainsi que des matériaux contaminants et une fraction décantante (b2) de densité comprise dans l'intervalle ] 1,100 - dₛ ] contenant des matériaux polymères usagés valorisables et des matériaux contaminants lourds, constituant un autre groupe de polymères usagés, valorisables pré-concentré et présélectionné, extrait du procédé pour être valorisé,
c) une étape de broyage de la fraction (b1) des matériaux polymères à valoriser provenant de l'étape b), à la maille de libération des matériaux contaminants inclus, adhérants ou assemblés aux fragments de la fraction des matériaux polymères à valoriser,
d) une étape de séparation mécanique par un criblage dimensionnel et/ou par facteur de forme ou aéraulique, de la fraction des matériaux polymères de synthèse à valoriser provenant de l'étape c) de broyage pour en éliminer au moins pour partie la fraction (d2) des matériaux contaminants libérés lors du broyage et les matériaux polymères expansés et en extraire la fraction (d1) des matériaux valorisables constituant le mélange souhaité, pré-concentré et présélectionné selon un groupe de matériaux valorisables, délimité par les densités dₘᵢₙᵢ = 0,850 (borne inférieure exclue) et dₘₐₓᵢ = 1,100 contenant encore des contaminants.
e) une étape de mouillage de la fraction provenant de l'étape d) au moyen d'eau en vue d'augmenter la densité du contaminant « bois » présent.
f) une étape de séparation de la fraction provenant de l'étape e) dans un milieu hydraulique dont la densité est réglée à la valeur 1,100, donnant une fraction surnageante (f1) de matériaux polymères de synthèse usagés à valoriser, formant un groupe pré-concentré et présélectionné de matériaux polymères de synthèse usagés et valorisables délimité par les densités dₘᵢₙᵢ = 0,850, (borne inférieure exclue) et dₘₐₓᵢ = 1,100 constituant une matière première pour un procédé de séparation fine des polymères présents selon leur composition en vue de leur recyclage et une fraction décantante (f2) contenant pour l'essentiel le contaminant« bois ».

Pour être à même de percevoir toute la portée du procédé selon l'invention, il est important que soient définis les mélanges de matériaux à valoriser (contenant des matériaux contaminants à éliminer au moins partiellement) constituant le flux de matériaux entrant dans le procédé de l'invention qui, à la sortie dudit procédé, donne la fraction de matériaux valorisables formant un mélange pré-concentré à au moins 60% et préférentiellement à au moins 85% de matériaux valorisables et présélectionné selon des groupes dont les limites de densité sont pour le premier ] 0,850 -1,100 ], pour le deuxième ] 1,100 - dₛ ] et pour un troisième au moins ] dₛ - 1,900 ], étant entendu qu'entre dₛ et 1,900 d'autres groupes peuvent être formés. Ainsi le procédé de traitement selon l'invention d'un mélange de matériaux à valoriser se présentant sous une forme fragmentée, pour l'obtention d'un mélange de matériaux pré-concentrés et présélectionnés en matériaux polymères de synthèse à valoriser, thermoplastiques et/ou thermodurcissables, est alimenté à partir de deux flux « I » et « II », résidus de broyage automobile et biens de consommation durables tels que ceux des domaines de l'électroménager et/ou l'électronique parvenus en fin de vie. Ces résidus de broyage ont leur plus grande dimension d'au plus 250 mm et préférentiellement d'au plus 200 mm.

Les flux « I » et « Il » peuvent être mis en oeuvre séparément ou en mélange selon la manière dont opère le broyeuriste, par campagne ou non. Le flux « I » est la fraction qui est appelée dans le métier « lourds non aspirés », à la sortie du broyeur d'automobiles et de biens de consommation durables, séparés ou non des métaux, le flux « Il » étant le flux léger aspiré connu sous l'appellation « fluffs » à la sortie dudit broyeur. Les fragments métalliques libres peuvent être séparés des parties non métalliques par des techniques magnétiques classiques et par courant de Foucauld.

Le flux « I » ou flux « Lourds » comporte des caoutchoucs et des polymères thermoplastiques et thermodurcissables non aspirés, des restes de métaux, des matériaux inorganiques, du bois etc. qui sont passés au travers d'une grille de séparation ayant une maille de 20 à 250 mm, de préférence 20 à 200 et très préférentiellement de 100 à 150 mm du broyeur primaire, dans le cas du broyage automobile et biens de consommation durables.

Le flux « II » ou flux « Légers » ou « fluff » constitué de matériaux thermoplastiques et thermodurcissables se présente sous la forme de plaques hétérogènes en dimensions, de morceaux de mousse et/ou de feuilles, de tissus adhérants à des substrats, de fils, de déchets de films.

Certains broyeurs de véhicules et/ou de biens de consommation durables opèrent sous aspersion d'eau pour éviter les risques d'explosion et les formations de poussières qui sont autant de risques supplémentaires pour l'environnement. Ainsi, les résidus de broyage n'ont pas la même teneur en humidité d'un lot à l'autre selon les quantités de mousses à cellules ouvertes, de fibres et de tissus.

En particulier lorsque les mousses flexibles à cellule ouvertes qui sont essentiellement des mousses polyuréthane (provenant des sièges automobiles), sont imbibées d'eau, il est préférable de les traiter par des procédés adaptés qui tiennent compte de leurs caractéristiques différentes et plus précisément de leur densité apparente et leur séparation semble devoir s'effectuer en exploitant leur facteur de forme.

Par contre, lorsque les résidus sont dans un état sec, une première aspiration légère pourra être particulièrement avantageuse pour extraire ces mêmes mousses flexibles à cellules ouvertes.

La récupération des métaux peut se faire à chaque étape du procédé de pré-concentration de la fraction des matériaux organiques de synthèse, par les moyens connus tels que séparation magnétique et séparation par courant de Foucault.

Le procédé de pré-concentration et de présélection par groupe de densités des fractions de matériaux valorisables qui sont des polymères de synthèse s'adapte à tout système de broyage de véhicules ou/et de biens de consommation durables déjà en place, quelle que soit la technique de broyage pour la destruction de ces biens en fin de vie.

Le procédé, les technologies, les équipements et les installations de pré-concentration et de présélection s'y rattachant sont préférentiellement positionnés sur le site du gros broyeur automobile, dans le cas du traitement de résidus de broyage automobile.

Pour permettre une bonne compréhension des divers matériaux valorisables et contaminants constituant le mélange de matériaux à soumettre au procédé de pré-concentration selon l'invention, résultant d'un broyage destructif de biens de consommations en fin de vie, tels que véhicules automobiles par exemple, ces divers matériaux sont précisés dans les définitions suivantes :
✔ Les matériaux lourds et les matériaux légers : les matériaux lourds constituent la fraction la plus lourde, issue d'une étape de séparation par densité réelle ou densité apparente, dans le procédé selon l'invention, du flux de matière en traitement, par opposition aux matériaux légers constituant la fraction légère du même flux.

II est à noter qu'au moins une partie des matériaux lourds d'une étape de séparation peuvent devenir les matériaux légers de l'étape de séparation ultérieure, et vis versa : une partie des matériaux légers d'une étape peut être considérée comme matériaux lourds dans l'étape de séparation ultérieure.
✔ Les matériaux ultra légers : la première fraction légère du flux de matière en traitement, séparée par densité ou densité apparente, est appelée fraction d'ultra légers. Cette fraction d'ultra légers est notamment composée de mousse, de textiles, de films, de morceaux de fils, ces matériaux préférentiellement dans un état sec ayant une densité qui augmente en fonction du taux d'humidité.
✔ Les matériaux ultra lourds : la première fraction lourde du flux de matière en traitement, séparée par densité ou densité apparente, est appelée fraction d'ultra lourds. Cette fraction d'ultra lourds est notamment composée de sables, de métaux, de caoutchoucs, de bois.
✔ Les matériaux polymères de synthèse : correspondent à la partie du flux de matière en traitement composée de polymères thermoplastiques et thermodurcissables à valoriser qui peuvent être extraits des résidus de broyage et réutilisés ou recyclés.
✔ La fraction des matériaux organiques autre que polymères à valoriser est principalement composée de bois, de déchets de textiles organiques, de déchets de fils ou autres.
✔ La fraction des matériaux polymères mousses est essentiellement formée par les mousses à cellules ouvertes ainsi que les mousses alvéolaires à cellules fermées telles que les mousses polyuréthanes, matériaux polymères élastomériques ou non ayant fait l'objet d'une action porophore dans la masse.
✔ La fraction des matériaux contaminants est formée par des déchets ou particules métalliques, des morceaux de caoutchouc, de verre, du gravier, du sable, du bois, des déchets de mousses polymères, de films, de filaments de tissus en matériaux polymères de synthèse ou autres déchets qui doivent en être éliminés.

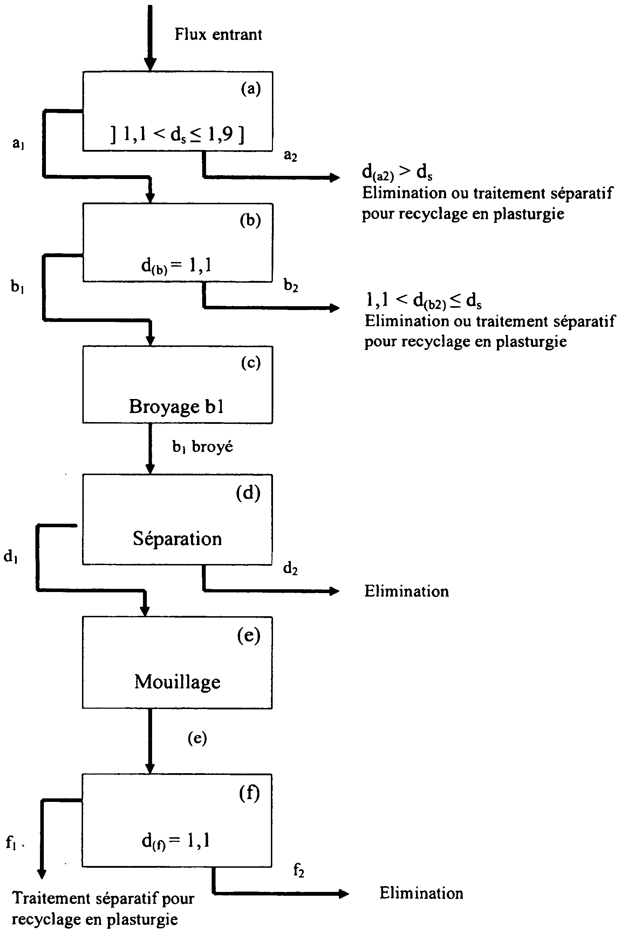

### Description détaillée de l'invention (selon la figure 1)

Le procédé de pré-concentration et de présélection simultanée au moins d'un groupe en matériaux polymères par traitement d'un mélange de matériaux fragmentés issus de résidus de broyage d'objets en fin de vie, tels que par exemple automobiles, électroménagers, matériels électroniques et mélange formé de fractions de matériaux aussi divers que des matériaux polymères, des métaux, des matériaux minéraux et des matériaux d'origine organique autres que les matériaux polymères ci-dessus évoqués, à l'exclusion des matériaux polymères expansés, concerne tous les matériaux polymères et/ou copolymères que l'on cherche à valoriser, de types thermoplastiques et thermodurs, en particulier, polaires ou non-polaires, chargés ou non chargés, ignifugés ou non, adjuvantés ou non, qui sont présents dans les objets consommables précités, parvenus en fin de vie et qui sont recyclables dans les domaines de la plasturgie.

Le procédé de pré-concentration et de présélection simultanée d'au moins un groupe de matériaux polymères usagés du mélange de matériaux divers précités, issus de résidus de broyage, consiste à traiter ledit mélange pour en éliminer au moins partiellement, les matériaux contaminants non valorisables formés des fractions de matériaux autres que les polymères à valoriser et simultanément présélectionner au moins un groupe desdits matériaux valorisables. Cette élimination permet ainsi un enrichissement dudit mélange en matériaux polymères valorisables par une augmentation de leur concentration et cette présélection simultanée permet de créer au moins un groupe de matériaux polymères usagés à valoriser chaque groupe étant délimité par un intervalle de densité défini par ] dₘᵢₙᵢ - dₘₐₓᵢ ], qui lui est propre.

Une fois pré-concentré par élimination au moins partielle des fractions contaminantes non valorisables et présélectionné en au moins un groupe de polymères usagés valorisables, le mélange enrichi en matériaux polymères valorisables présélectionné peut être traité par des moyens appropriés sortant du domaine de l'objet de l'invention.

Tel qu'il se manifeste le procédé de pré-concentration et de présélection simultanée d'au moins un groupe de matériaux polymères usagés valorisables, comporte en enchainement dans l'ordre, une étape (a) de séparation hydraulique dans un milieu de densité « ds » choisie dans l'intervalle de densité ] 1,100 - 1,900 ] (borne inférieure exclue) donnant une fraction surnageante (a1) et une fraction décantante (a2), puis une étape (b) de séparation hydraulique de la fraction surnageante (a1) venant de l'étape (a) à une densité de 1,100 donnant une fraction surnageante (b1) de densité au plus égale à 1,100 et une fraction décantante (b2), de densité comprise dans l'intervalle ] 1,100 - dₛ ], une étape (c) de broyage, fin de la fraction surnageante (b1), une étape (d) de séparation mécanique par criblage du aéraulique donnant une fraction de matériaux valorisables (d1) une étape (e) de mouillage de la fraction (d1) enfin une étape (f) de séparation hydraulique dans un milieu de densité 1,100 donnant une fraction surnageante (f1) formant un groupe préconcentré et présélectionné de matériaux polymères usagés à valoriser dont les densités se situent dans les limites ] 0,850 - 1,100 ].
* concernant la fraction (a1) surnageante de l'étape (a) dont la densité est comprise dans l'intervalle ] 0,850 - dₛ ], cette fraction enchaîne systématiquement les étapes (b), (c), (d), (e), (f), en traitant les fractions surnageantes (b1), (d1), (f1) ;
   Cette fraction (a1 ) donne un mélange de « n » groupes de matériaux polymères homogènes séparables, chaque groupe ayant une densité ] dₘᵢₙᵢ₍ₙ₎ -d ₘₐₓᵢ(n)], « n » prenant des valeurs entières comprises entre 1 et le nombre de type de matériaux polymères à récupérer,
* concernant la fraction (a2) décantante de l'étape (a) dont les densités sont comprises dans l'intervalle ] dₛ - 1,900 ], elle peut être définitivement éliminée selon la valeur prise initialement par dₛ dans l'étape (a) ou bien elle subit, indépendamment de la fraction (a1), un traitement de valorisation par étapes, par exemple, de séparation hydraulique par densité pour recueillir les matériaux polymères usagés valorisables présents dans ladite fraction dont les densités sont comprises dans l'intervalle ] dₛ - 1,900 ] ; selon des groupes de densité dₘᵢₙᵢ₍ₙ₎ -dₘₐₓᵢ₍ₙ₎], « n » prenant des valeurs entières comprises entre 1 et le nombre de type de matériaux polymères à récupérer,
* concernant la fraction (b2) décantante de l'étape (b) dont les densités se situent dans l'intervalle ] 1,1 - dₛ ], elle peut être définitivement éliminée ou bien elle subit, indépendamment de la fraction (b1) un traitement de valorisation par étapes de séparation hydraulique par densité pour recueillir les matériaux polymères usagés valorisables présents dans ladite fraction dont les densités sont comprises dans l'intervalle ] 1,1 - dₛ ], selon des groupes de densité ] dₘᵢₙᵢ₍ₙ₎ -dₘₐₓᵢ₍ₙ₎], « n » prenant des valeurs entières comprises entre 1 et le nombre de type de matériaux polymères à récupérer,

Préférentiellement, le choix de la densité dₛ donnée au milieu hydraulique de séparation de l'étape (a) est fait dans l'intervalle ] 1,100 - 1,500 ].

Ainsi, selon le procédé de l'invention, il est possible de préconcentrer et d'extraire au moins un groupe sélectionné formé par des matériaux polymères valorisables se présentant sous l'aspect d'un mélange de matériaux polymères fragmentés dont le critère de regroupement est l'intervalle de densité « dₘᵢₙᵢ - dₘₐₓᵢ » choisi pour un groupe, ce groupe formé d'un mélange de polymères usagés contenant encore des fractions de matériaux contaminants qui seront ultérieurement éliminés.

Selon ce même procédé de l'invention, il est également possible d'extraire la fraction des polymères expansés, en particulier celle formée de mousses à cellules ouvertes, constituant l'un des contaminants gênants.

### Etape a) du procédé selon l'invention

Selon le procédé de traitement d'un mélange de matériaux, objet de l'invention, l'étape a) reçoit la totalité du flux des matériaux divers fragmentés se présentant sous la forme d'un mélange provenant des résidus de broyage d'objets en fin de vie tels que précédemment définis. Cette étape a) du procédé selon l'invention est une étape de séparation par densité dans un milieu hydraulique dont la densité est réglée à une valeur « ds » choisie dans un intervalle de densité ] dₘᵢₙᵢ - dₘₐₓᵢ ] critère de rassemblement en groupe desdits matériaux polymères usagés, chaque groupe formé ayant son propre intervalle de densité ] dₘᵢₙᵢ- dₘₐₓᵢ ] qui le caractérise.

Dès lors, dₛ est choisie dans l'intervalle de densité défini selon l'invention qui, (borne inférieure exclue) est compris entre 1,100 et 1,900.

La valeur de densité choisie dₛ pour le milieu de séparation hydraulique de l'étape (a), constitue alors la borne supérieure de l'intervalle ] dₘᵢₙᵢ - dₘₐₓᵢ ] d'un premier groupe de matériaux polymères usagés valorisables à présélectionner, dₛ étant alors confondue dans la valeur dₘₐₓᵢ dudit groupe tandis que la borne inférieure dₘᵢₙᵢ est choisie entre ] 0,850 et dₛ ] pour assurer cette présélection, selon l'importance donnée à l'intervalle de densité de ce premier groupe. Ce premier groupe de matériaux polymères usagés valorisables à présélectionner et à préconcentrer forme la fraction surnageante (a1) de densité maximale dₛ .

Dans un cas particulier, par exemple, où est souhaitée la réalisation simultanée de la préconcentration en matériaux polymères usagés valorisables présents da mélange et de la présélection de deux groupes, dont chacun est identifié par des limites de densités précises ] dₘᵢₙᵢ - dₘₐₓᵢ ] pour chaque groupe, la densité dₛ du milieu hydraulique de séparation est choisie égale à 1,100 (en pratique industrielle) permettant ainsi la présélection d'un groupe d'intervalle de densités allant de dₘᵢₙᵢ₍₁₎ = 0,850 à dₘₐₓᵢ₍₁₎ = 1,100 (borne inférieure exclue) et d'un autre groupe de densités allant de dₘᵢₙᵢ₍₂₎ = 1,100 à dₘₐₓᵢ₍₂₎ = 1,900 (borne inférieure exclue).

Ainsi, un premier groupe de limites de densités comprises entre dₘᵢₙᵢ₍₁₎ et dₘₐₓᵢ₍₁₎ (borne inférieure exclue) comporte, par exemple, la totalité du polystyrène non chargé (PS: 1,05), du polypropylène (PP: 0,900-0,910), du polyéthylène basse densité (PEBD : 0,91 - 0,94), du polyéthylène haute densité (PEHD : 0,94 - 0,96), des mousses de polyéthylènes, des mousses de polypropylène, d'une partie des polyamides (PA : 1,02 à 1,15), chargées ou non chargées, d'une majeure partie des ABS (environ 66% d'ABS : 1,06 à 1,12), la totalité du polypropylène chargée de 10% en talc (PP : 10% talc : 0,97), le polypropylène chargée de 20% en talc (PP : 20% talc : 1,04), des copolymères.

L'autre groupe de limites de densité dₘᵢₙᵢ₍₂₎ - dₘₐₓᵢ₍₂₎ (borne inférieure exclue) comporte, par exemple, le reste des polyamides (1,13-1,15), le reste des ABS, la totalité des aminoplastes (1,4), le polycarbonate (1,20), les PET amorphes, cristallins (1,30-1,40), les phénoplastes (1,25-1,40), les PVC plastifié (1,20-1,35), les PVC rigides (1,38-1,40), les PVC chargés (1,4 -1,7), le PP chargé talc à 30% (1,13) et chargé talc à 40% (1,24), des copolymères.

Chacun des groupes préconcentrés et présélectionnés en des mélanges de matériaux polymères fragmentés, contient encore des fractions de matériaux contaminants ultérieurement éliminés lors du traitement de chaque groupe pour en extraire par séparation sélective chaque matériau polymère usagé valorisable.

Dans un autre cas particulier, par exemple, où est souhaitée la réalisation simultanée de la préconcentration en matériaux polymères usagés valorisables présents dans le mélange et de la présélection de trois groupes, dont chacun est identifié par des limites de densités précises dₘᵢₙᵢ - dₘₐₓᵢ pour chaque groupe, la densité dₛ du milieu hydraulique de séparation est choisie, par exemple, égale à 1,250 permettant la préconcentration et la présélection d'un premier groupe de limites de densité allant de dₘᵢₙᵢ₍₁₎ = 0,850 (borne inférieure exclue) à dₘₐₓᵢ₍₁₎ = 1,100, un deuxième groupe limites de densité allant de dₘᵢₙᵢ₍₂₎ = 1,100 (borne inférieure exclue) à dₘₐₓᵢ₍₂₎ = 1,250 et un troisième groupe de limites de densité allant de dₘᵢₙᵢ₍₃₎ = 1,250 (borne inférieure exclue) à dₘₐₓᵢ₍₃₎ = 1,900.

Dans un autre cas particulier, par exemple, où est souhaitée la réalisation simultanée de la préconcentration en matériaux polymères usagés valorisables présents dans le mélange et de la présélection de quatre groupes, dont chacun est identifié par des limites de densités dₘᵢₙᵢ - dₘₐₓᵢ pour chaque groupe, la densité dₛ du milieu hydraulique de séparation est choisie, par exemple, à 1,350 permettant la préconcentration et la présélection d'un premier groupe de limites de densité allant de dₘᵢₙᵢ₍₁₎ = 0,850 (borne inférieure exclue) à dₘₐₓᵢ₍₁₎ = 1,100, d'un deuxième groupe de limites de densité allant de dₘᵢₙᵢ₍₂₎ = 1,100 (borne inférieure exclue) à dₘₐₓᵢ₍₂₎ = 1,250, d'un troisième groupe de limites de densité allant de dₘᵢₙᵢ₍₃₎ = 1,250 (borne inférieure exclue) à dₘₐₓᵢ₍₃₎ = 1,350 et d'un quatrième groupe de limites de densité allant de d_{mini (4)} = 1,350 (borne inférieure exclue) à dₘₐₓᵢ₍₄₎ = 1,900.

D'une manière générale, le choix de la valeur de dₛ entre 1,100 et 1,900 (borne inférieure exclue) est réalisé en fonction des groupes de polymères usagés valorisables, en mélange, à créer par présélection selon des limites de densité dₘᵢₙᵢ₍ₙ₎ - dₘₐₓᵢ₍ₙ₎ pour chaque groupe et simultanément à préconcentrer, selon les types de matériaux polymères de recyclage souhaités par les utilisateurs, c'est-à-dire par les marchés.

Le milieu hydraulique de séparation, à densité dₛ choisie comme seuil de séparation selon l'invention dans un intervalle de densité, bornes incluses, compris dans l'intervalle ] 1,1 - 1,9 ] est formé d'eau et de composés minéraux solubles dans l'eau, tels que des sels minéraux (préférentiellement les sels de sodium, de potassium, de magnésium), et/ou des composés minéraux insolubles ou faiblement solubles dans l'eau, de très faible dimension granulométrique tels que des argiles, du carbonate de calcium, pulvérulent mis en suspension dans l'eau en quantité exactement contrôlée pour atteindre exactement la valeur choisie comme seuil de séparation pour la densité dₛ .

Préférentiellement, la courbe granulométrique des particules des composés minéraux insolubles ou très peu solubles, qui concerne 100% des particules desdits composés est au plus de 5 µm, ce qui veut dire que toutes ces particules ont un équivalent-diamètre » compris dans l'intervalle ] 0 µm - 5 µm ], la borne inférieure étant exclue.

Préférentiellement, le diamètre médian des particules des composés minéraux insolubles ou très peu solubles, est compris dans l'intervalle ] 0 µm - 1 µm ], la borne inférieure étant exclue.

La fraction (a2) décantante résultant de la première étape (a) de séparation hydraulique, qui contient au moins pour partie la fraction des matériaux contaminants du mélange des matériaux fragmentés, peut contenir une fraction de matériaux polymères usagés à valoriser, d'autant plus importante quantitativement que la valeur choisie pour dₛ est proche de 1,1.

### Etape b) du procédé selon l'invention

Cette étape consiste en la séparation de la fraction surnageante (a1) venant de l'étape a) dans un milieu hydraulique dont la densité est exactement réglée à la valeur de 1,1.

Cette fraction (a1) donne une fraction surnageante (b1) de densité au plus égale à 1,1 formée de matériaux polymères de synthèse usagés ultra légers et/ou expansés, de matériaux polymères de synthèse usagés à valoriser se présentant sous une forme fragmentée ainsi que des matériaux contaminants et une fraction décantante (2) de densité comprise dans l'intervalle ] 1,1 - dₛ ] contenant des matériaux polymères usagés valorisables et des matériaux contaminants lourds.

Le milieu hydraulique de séparation de l'étape b) est formé par les mêmes moyens que ceux mis en oeuvre dans la préparation du milieu hydraulique de l'étape a).

### Etape c) du procédé selon l'invention

La fraction (b1) des matériaux polymères à valoriser de densité au plus égale à 1,1 provenant de l'étape b) de séparation dans un milieu hydraulique du procédé selon l'invention, qui contient des matériaux contaminants inclus, adhérants ou assemblés aux matériaux polymères usagés à valoriser, est introduite dans l'étape c) du pro selon l'invention. Cette étape c) consiste en un broyage fin de ladite fraction (b1) à valoriser pour atteindre au moins la maille de libération des matériaux contaminants inclus dans les matériaux polymères usagés à valoriser afin de libérer lesdits matériaux polymères valorisables de tous les matériaux contaminants, adhérants, assemblés ou inclus. Cette étape de broyage, à au moins la maille de libération des matériaux contaminants, conduit à la réalisation et à l'obtention d'une nécessaire fragmentation fine donnant des particules de polymères à valoriser ayant leur plus grande dimensions généralement comprise entre 5 et 50 mm et préférentiellement comprise entre 20 mm et 30 mm.

La fraction (b2) des matériaux polymères à valoriser, de densité comprise entre 1,1 (borne inférieure exclue) et dₛ subit séparément à la fraction (b1) un traitement de broyage fin dans l'étape c), équivalent à celui subit par la fraction (b1) avec les mêmes moyens de broyage pour parvenir aux résultats de séparation des matériaux polymères usagés à valoriser et les matériaux contaminants adhérants, assemblés ou inclus et de dimensionnement des particules de polymères usagés à valoriser.

Le broyage de l'étape c) du procédé selon l'invention peut s'effectuer en continu dans des broyeurs appropriés, connus de l'homme de métier.

### Etape d) du procédé selon l'invention

A la sortie de l'étape c) de broyage fin, le flux (b1) de matériaux broyés en (c) formé de matériaux polymères valorisables et de matériaux contaminants libérés par le broyage et qui doivent être éliminés, entre dans une étape d) de séparation mécanique par criblage et/ou de séparation aéraulique par flux gazeux. Toutefois, si la libération par broyage des matériaux contaminants rigides ne créé pas une situation de séparation ultérieure délicate, il n'en est pas de même des matériaux souples, en particulier les mousses polymères qui, lors du broyage, sont soumises à un phénomène de compression, c'est-à-dire de réduction de volume. A la sortie de l'étape c) de broyage fin, les particules de mousses comprimées ont tendance à reprendre leur volume initial par repos, et dès lors qu'elles sont relâchées, prennent un facteur de forme différent de celui des matériaux rigides valorisables que sont les fragments de polymères finement broyés.

De plus, le flux des matériaux finement broyés provenant de l'étape c) du procédé selon l'invention peut manifester un état de siccité variable qui, selon que le flux de matériaux provenant de l'étape c) est plutôt sec ou humide, peut avoir une incidence sur l'étape d) finale du procédé selon l'invention, la valeur seuil du taux d'humidité seuil entre l'état sec et l'état humide étant de au plus 20% en poids.

Dans le cas où le flux des matériaux finement broyés provenant de l'étape c) est relativement sec, la séparation des diverses fractions ultra légères, légères et lourdes de ce flux peut être de type aéraulique et peut se pratiquer par aspiration et/ou soufflage dans une zone de séparation aéraulique comprenant au moins un moyen de séparation aéraulique fonctionnant par insufflation et/ou par aspiration d'un flux gazeux, cette zone comportant une entrée du mélange des matériaux à séparer et trois sorties permettant l'extraction d'une fraction de matériaux polymères ultra légers et/ou expansés à éliminer, d'une fraction consistant en des matériaux lourds contaminants à éliminer et d'une fraction formée des matériaux polymères à valoriser. Cette dernière fraction constitue le flux de matériaux valorisables pré-concentré et présélectionné résultant du procédé selon l'invention, contenant préférentiellement environ au moins 85 % en poids de matériaux valorisables et au plus 15% en poids de matériaux contaminants.

Dans le cas où la zone de séparation aéraulique de l'étape d) du procédé selon l'invention comporte un seul moyen de séparation aéraulique, ce moyen de séparation comporte lui même au moins deux zones spécifiques de séparation des matériaux à séparer. L'une des zones spécifiques de séparation aéraulique est la zone qui permet simultanément l'alimentation en matériaux à séparer dont le flux entrant est soumis au cours de son introduction dans ladite zone à une séparation aéraulique précoce et à une sortie immédiate du moyen de séparation par flux gazeux de la fraction des matériaux ultra légers à éliminer. L'autre zone spécifique de séparation aéraulique, munie d'une surface de criblage et également soumise à un flux gazeux, traite le mélange des fractions des matériaux lourds et contaminants et des matériaux valorisables provenant de la première zone spécifique, le flux gazeux séparant et entraînant vers une sortie du séparateur aéraulique la fraction des matériaux valorisables, tandis que la fraction des matériaux lourds contaminants se sépare de la fraction valorisable par gravité et est éliminée du moyen de séparation aéraulique par une sortie appropriée. Un tel moyen de séparation aéraulique ou séparateur aéraulique à deux zones spécifiques de séparation peut être choisi dans le groupe constitué par les séparateurs-nettoyeurs-calibreurs modulaires comportant des cribles et une double aspiration : un séparateur aéraulique de ce type est commercialisé, par exemple, par la société WESTRUP.

Dans le cas où la zone de séparation aéraulique de l'étape d) du procédé selon l'invention se compose de deux moyens de séparation aérauliques, lesdits moyens de séparation sont dès lors montés en série de telle manière qu'une sortie au moins des fractions des matériaux contaminants ultra légers et/ou expansés et lourds se trouve sur le premier moyen de séparation aéraulique.

Selon une variante relative à la présence de deux moyens de séparation aérauliques par flux gazeux dans la zone de séparation aéraulique, le premier moyen de séparation aéraulique qui reçoit le flux entrant de matériaux à séparer en fractions de matériaux contaminants et valorisables provenant de l'étape c), traite ce flux en deux fractions, de telle sorte que la fraction des matériaux ultra légers est extraite par la partie supérieure du premier moyen de séparation aéraulique, tandis qu'un mélange des fractions de matériaux lourds contaminants et des matériaux à valoriser est extraite par la partie basse dudit moyen de séparation aéraulique. Ce mélange des fractions des matériaux lourds contaminants et des matériaux à valoriser est introduit dans le deuxième moyen de séparation aéraulique, la fraction des matériaux lourds contaminants étant éliminée par la partie basse du deuxième moyen de séparation aéraulique tandis que la fraction des matériaux à valoriser est extraite de l'étape d) et peut subir encore une étape supplémentaire d'élimination de matériaux contaminants.

Selon une autre variante relative à la présence de deux moyens de séparation aérauliques à flux gazeux dans la zone de séparation aéraulique, le premier moyen de séparation qui reçoit le flux entrant de matériaux à séparer en fractions de matériaux contaminants et valorisables provenant de l'étape c) traite le flux en deux fractions de telle sorte que la fraction des matériaux lourds contaminants est extraite par la partie basse dudit moyen de séparation aéraulique tandis qu'un mélange des fractions des matériaux ultra légers contaminants et des matériaux valorisables est extrait par la partie supérieure du premier moyen de séparation aéraulique. Ce mélange des fractions de matériaux ultra légers contaminants et de matériaux valorisables est introduit dans le deuxième moyen de séparation aéraulique, la fraction des matériaux ultra légers contaminants étant éliminée par la partie supérieure du deuxième moyen de séparation aéraulique, tandis que la fraction des matériaux valorisables est extraite par la partie inférieure dudit moyen de séparation.

Que soit pratiquée l'utilisation d'un ou plusieurs moyens de séparation aérauliques, dans l'étape d) du procédé selon l'invention, la fraction des matériaux ultra légers contaminants extraite de la zone de séparation aéraulique peut être soumise étape supplémentaire de séparation par criblage selon leur plus grande dimension et/ou leur facteur de forme pour réaliser la séparation d'une fraction formée de matériaux de dimensions inférieures à celle de la maille du crible telles que des poudres de polymères, des déchets de fils et/ou de films et/ou de tissus, de petits volumes de mousses et pour récupérer tous les flocons de mousses ne pouvant passer à travers les mailles du crible et les valoriser par une opération appropriée telle qu'une glycolyse, agglomération mécanique avec ajout d'un liant, ou un broyage cryogénique pour produire des charges (filler) organiques destinées à être introduites dans des articles réalisés au moyen de polymères thermoplastiques ou thermodurcissables.

Dans le cas où le flux des matériaux finement broyés provenant de l'étape c) est relativement humide, c'est-à-dire contenant plus de 20% en poids d'eau, la séparation mécanique par criblage dimensionnel et/ou facteur de forme peut être réalisée par l'intermédiaire d'un dispositif comportant un moyen de criblage tel qu'une grille à maille calibrée de séparation, adaptée aux matériaux dont on recherche la séparation et plus particulièrement à la forme des fragments valorisables.

Un moyen de criblage adapté à la réalisation de l'étape de séparation peut être choisi parmi les dispositifs munis d'un tambour rotatif à mailles calibrées ou munis d'une grille vibrante à mailles calibrées ou de tout autre dispositif muni d'un moyen de séparation calibré : la plus grande dimension de la maille calibrée, est généralement d'au plus 30 mm et préférentiellement comprise entre 1 mm et 10 mm.

Lors de la réalisation de l'étape d), une séparation mécanique par criblage calibré peut se faire au moyen d'un dispositif à mailles calibrées tel que à grille vibrante ou à surface de séparation cylindrique tel qu'un « trommel » (tambour) en rotation, à axe de révolution faiblement incliné, la maille calibrée de la surface destinée à la séparation étant formée par des barreaux disposés selon des génératrices et prenant appui sur des structures circulaires coaxiales à l'axe de révolution de ladite surface : la maille calibrée se définit par l'espace libre délimité par deux barreaux et deux structures circulaires contiguës de telle sorte que :
✔ seules les fractions de polymères valorisables se présentant sous la forme de plaquettes passent dans cet espace libre en entraînant le minimum de matériaux contaminants dont la plus grande dimension est inférieure à la distance deux barreaux, ces matériaux contaminants étant des mousses, des morceaux de bois et autres,
✔ les fractions de matériaux contaminants à facteur de forme différent de celui ou de ceux des fractions polymères valorisables ou encore dont la plus grande dimension est au moins égale à la distance entre deux barreaux, sont retenues par la maille de tri que constituent les barreaux et les structures annulaires précédemment évoquées : ces matériaux contaminants ainsi éliminés sont essentiellement des mousses, des déchets de bois, du caoutchouc alvéolaire et autres matériaux.

Cette étape de séparation mécanique par criblage et/ou facteur de forme permet l'élimination d'une fraction importante des mousses polymères et des autres matériaux contaminants tels que films et fils polymères, morceaux de bois au moins pour partie.

A l'issue de cette séparation mécanique par criblage et/ou aéraulique (d), la fraction (b1) des matériaux polymères valorisables préconcentrés et présélectionnés extraite de l'étape (d) entre dans l'étape (e) du procédé selon l'invention.

La fraction (b2) de densité comprise entre 1,1 et dₛ (borne inférieure exclue) provenant de l'étape (b), contenant des matériaux polymères usagés valorisables et des matériaux contaminants qui constitue un autre groupe de polymères usagés valorisables préconcentré et présélectionné à valoriser, peut subir le même broyage fin de l'étape (c) que la fraction (b1) puis à la sortie de l'étape (c) le même traitement de séparation de matériaux polymères valorisables et matériaux contaminants libérés par le broyage, dans l'étape (d) de séparation mécanique par criblage et/ou séparation aéraulique, étant entendu que cette fraction (b2) exempte de matériaux polymères ultra légers et/ou expansés à éliminer est préférentiellement traitée par une séparation mécanique par criblage.

A l'issue de cette séparation mécanique par criblage et/ou aéraulique (d), la fraction (b2) des matériaux polymères valorisables préconcentrés et présélectionnés extraite de l'étape (d), peut passer dans l'étape (e) du procédé selon l'invention ou entrer directement dans l'étape (f) en raison de l'intervalle de densité 1,1 à dₛ desdits matériaux.

### Etape e) du procédé selon l'invention

Le flux (b1) des matériaux de densité d_{(b1)} ≤ 1,1, après broyage dans l'étape (c) et séparation mécanique et/ou aéraulique dans l'étape (d), qui l'ont débarrassé des mousses polymères et au moins pour partie d'autres matériaux contaminants, est soumis dans l'étape (e) à un mouillage au moyen d'eau, par aspersion ou par immersion en bains fortement brassés ou non ou par tout autre moyen, en vue d'augmenter la densité du contaminant « bois » et pouvoir l'éliminer dans l'étape (f) suivante.

Le flux (b2) des matériaux de densité d_{(b2)} comprises dans l'intervalle ] 1,100 - dₛ ] après broyage dans l'étape (c) et séparation mécanique ou aéraulique dans l'étape (d), peut être soumis à l'étape (e) de mouillage mais peut éventuellement passer directement de l'étape (d) à l'étape (f) dans laquelle ledit flux est libéré de la présence du contaminant « bois ».

### Etape f) du procédé selon l'invention

L'étape (f) reçoit la totalité du flux de matériaux provenant de l'étape (e).

Cette étape (f) du procédé selon l'invention est une étape de séparation par densité dans un milieu hydraulique dont la densité est réglée sur la valeur de 1,100 assurant la séparation d'une fraction (f1) surnageante contenant des matériaux polymères préconcentrés et présélectionnés et des matériaux contaminants dont les densités sont comprises dans l'intervalle ] 0,850 < d(_{f1}) ≤ 1,100 ] et fraction (f2) décantante contenant le contaminant « bois » densifié.

A l'issue de cette étape de séparation (f) en milieu hydraulique, la fraction des matériaux polymères valorisables (f) extraite du procédé de traitement selon l'invention constitue une fraction préconcentrée et présélectionnée en matériaux valorisables atteignant préférentiellement au moins 85% en poids de polymères de synthèse recyclés à valoriser.

Le procédé selon l'invention est utilisé pour opérer simultanément dans un mélange de matériaux résultant de la destruction par broyage de biens de consommation durables en fin de vie une préconcentration et une présélection de matériaux polymères usagés valorisables par recyclage.

Le procédé de préconcentration et de présélection simultanées selon l'invention d'au moins un groupe de matériaux polymères usagés, de compositions diverses, en mélange entre eux et avec des matériaux contaminants est absolument adapté à tous les systèmes de destruction par broyage de biens de consommation durables parvenus en fin de vie tels que, par exemple, les automobiles, le matériel électroménager, le matériel informatique.

Enfin, le procédé selon l'invention peut être utilisé d'abord à la préconcentration et à la présélection de matériaux polymères usagés à recycler dans les domaines de la plasturgie, mais aussi pour l'alimentation de procédés de séparation très sélectifs conduisant à l'extraction de flux de matériaux polymères recyclables, rendus homogènes par leur composition.

L'invention sera mieux comprise grâce à un exemple cité à titre illustratif et au schéma représentatif (selon la figure) de la préconcentration et de la présélection simultanées de polymères usagés recyclables.

### Exemple (selon la figure) :

On a traité selon le procédé de l'invention un flux entrant fragmenté d'un résidu de broyage automobile en fin de vie dont les parties métaux ferreux ont été préalablement éliminées.

Ce flux d'alimentation du procédé selon l'invention dont le débit est de 20 T/h contient des matériaux polymères, des minéraux sableux, des métaux non ferreux, du bois, qui est criblé à la maille de 10/12 mm et soumis à aspiration pour éliminer les matières très légères telles que les mousses et les minéraux sableux.

Ce flux constitue le flux entrant dans le procédé selon l'invention.

Selon l'étape (a) du procédé, le flux d'alimentation entre dans un milieu hydraulique de séparation, dont la densité dₛ est réglée à 1,400. Cette densité dₛ = 1,400 constitue la limite de densité supérieure « d maxi » choisie pour un groupe de polymères usagés valorisables comprenant des polyoléfines, dont certaines chargées en talc, du polystyrène, des A.B.S., des polyamides, des P.V.C. et autres polymères et copolymères et des matériaux contaminants.

La fraction surnageante (a1) de densité maximale 1,400, est formée de polyoléfines chargées ou non (PP, PEBD, PEHD), de polystyrène (PS), de ABS, de polyamides (PA) d'aminoplastes, de polycarbonate (PC), de PET amorphes et cristallins, de phénoplastes, de PVC plastifiés et PVC rigides d'éthylène-vinyle acétate (EVA), de copolymères Ethylène-Propylène, d'Ethylène-Propylène caoutchouc (EPR), d'Ethylène-Propylène-diène monomère (EPDM), des polyméthyles-méthacrylates (PMMA) de d = 1,18, de polyuréthanes (PU) chargés ou non. Cette fraction surnageante (a1) représente une masse de l'ordre de 8 T/h.

La fraction décantante (a2) de densité supérieure à 1,400 contient également des matériaux polymères, dont pour l'essentiel les PVC chargés et des matériaux contaminants à éliminer. Une fois recueillie cette fraction décantante (a2) peut subir un traitement de séparation permettant de récupérer des matériaux polymères présents dans cette fraction c'est-à-dire le PVC chargé. Cette fraction décantante (a2) représente une masse de l'ordre de 12 T/h.

### Selon l'étape (b) du procédé :

La fraction surnageante (a1) provenant de l'étape (a) entre dans cette étape de séparation (b) où elle est traitée au moyen d'un milieu de séparation hydraulique de densité réglée à 1,100 en donnant une fraction surnageante (b1) de densité au plus égale à 1,100 et une fraction décantante (b2) de densité comprise dans 1,100 - 1,400].

La fraction surnageante (b1) contient du polypropylène (PP : d = 0,900 - 0,910), du polyéthylène basse densité (PEBD : d = 0,910 - 0,940), du polyéthylène haute densité (PEHD : d = 0,940 - 0,960), du polystyrène (PE : 1,040) d'une partie des polyamides (1,040 à 1,150), pour la fraction allant jusqu'à la densité 1,100 d'une partie des ABS (1,060 à 1,120), pour la fraction allant jusqu'à la densité 1,100 totalité du polypropylène chargé de 10% de talc (PP : 10% talc : 0,970) et de la totalité du polypropylène chargé de 20% de talc (PP : 20% talc : 1,040). Cette fraction surnageante représente une masse de l'ordre de 4 T/h.

La fraction décantante (b2) de densité comprise dans ] 1,100 - 1,400] contient également des matériaux polymères usagés valorisables qui sont pour l'essentiel le reste des polyamides (PA : 1,040 - 1,150) pour la fraction de densité supérieure à 1,100, le reste des ABS (d : 1,06 à 1,12) ayant une densité supérieure à 1,100, la totalité des aminoplastes (1,40), le polycarbonate (1,20), les PET amorphes, cristallins (1,300 à 1,400), les phénoplastes (1,25 - 1,40), les PVC plastifiés (1,20 - 1,35), les PVC rigides (1,38 - 1,40), les polypropylènes chargés de talc à 30% (1,13) et à 40% (1,24) et des matériaux contaminants à éliminer. Une fois recueillie cette fraction décantante (b2) peut subir un traitement de séparation permettant de récupérer les matériaux polymères usagés valorisables présents dans cette fraction pour obtenir autant de flux de composition homogène que de types de matériaux polymères présents valorisables. Cette fraction décantante (b2) représente une masse de l'ordre de 4 T/h.

Selon l'étape (c) du procédé : la fraction surnageante (b1) provenant de l'étape (b) entre dans cette étape de broyage (c) pour atteindre au moins la maille de libération des matériaux contaminants inclus dans les matériaux polymères usagés à valoriser ou encore assemblés avec ou adhérants aux dits matériaux. La maille de libération pratiquée à l'égard de la fraction (b1) a été de 20 mm à 30 mm.

Selon l'étape (d) du procédé : la fraction (b1) sortant de l'étape de broyage (c) après avoir été fragmentée à la maille de libération entre dans cette étape de séparation mécanique où elle subit d'abord une séparation aéraulique permettant l'élimination d'une fraction formée de matériaux légers de dimension inférieure à celle de la maille de libération pratiquée lors de l'étape de broyage permettant d'éliminer des poudres de polymères, des déchets de fils, de films, de tissus, des flocons de mousses polymères et autres, puis un criblage à facteur de forme, selon la plus grande dimension des matériaux rigides valorisables que sont les fragments de polymères usagés broyés à la maille de libération précitée assurant la séparation desdits fragments de matériaux polymères valorisables formant une fraction (d1) à recueillir, riche en matériaux polymères et des matériaux contaminants à éliminer que sont des mousses polymères, des déchets de bois, des caoutchoucs alvéolaires et autres La fraction recueillie (d1) après criblage par tri à facteur de forme, riche en matériaux polymères usagés valorisables, représente une masse de l'ordre de 5 T/h.

La fraction recueillie (d2) qui comprenne en mélange les matériaux légers éliminés par séparation aéraulique et les matériaux contaminants à facteur de forme, différent de celui ou de ceux des fractions polymères valorisables éliminées lors du criblage, par facteur de forme, est éliminée à la sortie de l'étape (d) : cette fraction (d2) représente une masse de l'ordre de 0,5 T/h.

Selon l'étape (e) du procédé : la fraction (d1) recueillie à la sortie de l'étape (d) est soumise dans cette étape à un mouillage au moyen d'eau pour augmenter la densité du contaminant « bois » encore présent dans ladite fraction (d1) et pouvoir l'éliminer dans l'ultime étape (f) du procédé.

Selon l'étape (f) du procédé : la totalité de la fraction (d1) sortant de l'étape (e) entre dans cette étape (f) où elle est traitée au moyen d'un milieu de séparation hydraulique de densité réglée à 1,100 en donnant une fraction surnageante (f1) de densité au plus égale à 1,100, très riche en matériaux polymères usagés recyclables dont les densités sont comprises dans l'intervalle ] 0,850 - 1,100 ] et une fraction (f2) décantante contenant les restes du contaminant « bois » densifié qui est éliminé. La fraction (f1) représente une masse de l'ordre de 4 T/h.

Dès lors, selon le procédé de l'invention, à l'issue de ces séparations, il a été possible de former trois groupes de matériaux polymères usagés de compositions diverses en mélange entre eux et avec des contaminants par préconcentration et présélection simultanées, provenant de la destruction par broyage de biens de consommation durables parvenus en fin de vie, recyclables dans les domaines de la plasturgie.

Le premier groupe préconcentré et présélectionné est formé par la fraction décantante (a2) dont les densités des composants valorisables sont supérieures à 1,400 et dont les composants essentiels sont des PVC chargés valorisables.

Le deuxième groupe préconcentré et présélectionné est formé par la fraction décantante (b2) dont les densités des composants valorisables sont comprises dans l'intervalle ] 1,100 - 1,400 ] et dont les composants essentiels sont des polyan des ABS, des aminoplastes, des polycarbonates, des PET amorphes et cristallins, des PVC plastifiés et rigides, des polypropylènes chargés talc (30% - 40%).

Le troisième groupe préconcentré et présélectionné est formé par la fraction surnageante (f1) dont les densités des composants valorisables sont comprises dans ] 0,850 - 1,100 ] et dont les composants essentiels sont des polypropylènes, des polyéthylènes, des polystyrènes, des polyamides, des ABS, des polyoléfines chargées.

Chacun des composants polymères de chaque groupe peut être extrait de son groupe, selon des fractions de polymères usagés recyclables homogènes en composition par le traitement de ces groupes au moyen d'un procédé de séparation sélectif tel que, par exemple, celui décrit dans le brevet européen n°0 918 606.

Ainsi grâce au procédé selon l'invention, il est possible de préconcentrer et de présélectionner simultanément au moins un groupe de matériaux polymères usagés valorisables de compositions diverses, en mélange entre eux et avec des matériaux contaminants, provenant de la destruction par broyage de biens de consommation durables parvenus en fin de vie, recyclables dans les domaines de la plasturgie.

## Revendications

1. Procédé de traitement de mélange de matériaux fragmentés composé de matériaux polymères usagés valorisables en faible quantité recyclables dans les domaines de la plasturgie et de matériaux contaminants issus du broyage de biens de consommation durables en fin de vie, consistant simultanément en :
▪ la préconcentration d'un mélange en matériaux polymères usagés valorisables par élimination partielle des matériaux contaminants présents dans le mélange et
▪ la présélection dans le mélange d'au moins un groupe de matériaux polymères usagés valorisables délimité par un intervalle de densité ] dₘᵢₙᵢ - dₘₐₓᵢ ] se situant à l'intérieur d'un intervalle de densité délimité par les bornes ] 0,850 - 1 ,900 ] du mélange de matériaux fragmentés issus de résidus du broyage de biens de consommation durables en fin de vie comprenant :
✔ une fraction de matériaux valorisables qui sont des matériaux polymères de synthèse, de nature et/ou de compositions et/ou de facteurs de forme divers dont les densités se situent dans l'intervalle ] 0,850 - 1 ,900 ],
✔ des fractions de matériaux contaminants formés de matériaux minéraux et/ou de matériaux métalliques et/ou de matériaux organiques autres que des matériaux polymères et/ou des matériaux polymères de synthèse dans un état expansé, en particulier les mousses,
le procédé comportant:
a) une étape de séparation dans un milieu hydraulique dont la densité est réglée à une valeur dₛ choisie dans un intervalle de densité, borne inférieure exclue compris entre ] 1,100 et 1,900], dₛ constituant la limite de densité supérieure dₘₐₓᵢ choisie pour un groupe de polymères usagés valorisables à présélectionner, alors que la limite de densité inférieure dₘᵢₙᵢ dudit groupe est comprise entre ]0,850 et dₛ ], milieu hydraulique dans lequel est introduit le mélange de matériaux polymères usagés à valoriser formant un groupe de polymères valorisables de densités supérieures à dₛ préconcentrés et présélectionnés et des matériaux contaminants, qui se sépare en une fraction surnageante (a1) de densité maximale dₛ et une fraction décantante (a2), contenant des matériaux polymères usagés à valoriser et au moins pour partie la fraction des matériaux contaminants du mélange des matériaux fragmentés de densité supérieure à dₛ, extraite hors du procédé
et **caractérisé en ce qu'**il comporte, dans l'ordre :
b) une étape de séparation de la fraction surnageante (a1) venant de l'étape a) dans un milieu hydraulique dont la densité est réglée à une valeur de 1,100 donnant une fraction surnageante (b1) de densité au plus égale à 1,100 qui consiste en une fraction de matériaux polymères de synthèse usagés ultra légers et/ou expansés et des matériaux polymères de synthèse usagés à valoriser se présentant sous une forme fragmentée ainsi que des matériaux contaminants et une fraction décantante (b2) de densité comprise entre ] 1,100 et dₛ] contenant des matériaux polymères usagés valorisables et des matériaux contaminants lourds, constituant un autre groupe de polymères usagés, valorisables pré-concentré et présélectionné, extrait du procédé pour être valorisé,
c) une étape de broyage de la fraction (b1) des matériaux polymères à valoriser provenant de l'étape b), à la maille de libération des matériaux contaminants inclus, adhérants ou assemblés aux fragments de la fraction des matériaux polymères à valoriser,
d) une étape de séparation mécanique par un criblage dimensionnel et/ou par facteur de forme, ou aéraulique de la fraction des matériaux polymères de synthèse à valoriser provenant de l'étape c) de broyage pour en éliminer au moins pour partie la fraction (d2) des matériaux contaminants libérés lors du broyage et les matériaux polymères expansés et en extraire la fraction (d1) des matériaux valorisables constituant le mélange souhaité, pré-concentré et présélectionné selon un groupe de matériaux valorisables, délimité par les densités dₘᵢₙᵢ = 0,850, (borne inférieure exclue) et d_{maXi} = 1,100 contenant encore des contaminants.
e) une étape de mouillage de la fraction provenant de l'étape d) au moyen d'eau en vue d'augmenter la densité du contaminant « bois » présent.
f) une étape de séparation de la fraction provenant de l'étape e) dans un milieu hydraulique dont la densité est réglée à la valeur 1,100, donnant une fraction surnageante (f1) de matériaux polymères de synthèse usagés à valoriser, formant un groupe pré-concentré et présélectionné de matériaux polymères de synthèse usagés et valorisables délimité par les densités dₘᵢₙᵢ = 0,850 (borne inférieure exclue) et dₘₐₓᵢ = 1,100 constituant une matière première pour un procédé de séparation fine des polymères présents selon leur composition en vue de leur recyclage et une fraction décantante (f2) à éliminer contenant pour l'essentiel le contaminant « bois ».

2. Procédé selon la revendication 1 **caractérisé en ce que** la fraction (a1) de densité maximale dₛ est formée d'un mélange de « n » groupes de matériaux polymères homogènes séparables, chaque groupe ayant une densité propre ] dₘᵢₙᵢ (n) - d_{maXi(n)} ], «n» prenant des valeurs entières comprises entre 1 et le nombre de type de polymère à récupérer.

3. Procédé selon la revendication 1 **caractérisé en ce que** la fraction (a2) décantante de l'étape (a) dont les densités sont comprises dans l'intervalle ] ds - 1,900 ], est définitivement éliminée.

4. Procédé selon la revendication 1 **caractérisé en ce que** la fraction (a2) décantante de l'étape (a) subit, indépendamment de la fraction (a1), un traitement de valorisation par étapes de séparation par densité pour recueillir les matériaux polymères usagés valorisables présents dans ladite fraction dont les densités sont comprises dans l'intervalle ] dₛ - 1,900], selon des groupes de densité ] dₘᵢₙᵢ₍ₙ₎- d_{maXi(n)}], « n » prenant des valeurs entières comprises entre 1 et le nombre de type de polymère à récupérer.

5. Procédé selon l'une au moins des revendications 1 à 4 **caractérisé en ce que** la fraction (b2) décantante de l'étape (b) dont les densités se situent dans l'intervalle ] 1,1 - dₛ ], est éliminée.

6. Procédé selon l'une au moins des revendications 1 à 4 **caractérisé en ce que** la fraction (b2) décantante subit, indépendamment de la fraction (b1) un traitement de valorisation par étapes de séparation par densité pour recueillir les matériaux polymères usagés valorisables présents dans ladite fraction dont les densités sont comprises dans l'intervalle ] 1 ,1 - dₛ ], selon des groupes de densité ] dₘᵢₙᵢ₍ₙ₎ - dₘₐₓᵢ₍ₙ₎ ], « n » prenant des valeurs entières comprises entre 1 et le nombre de type de polymère à récupérer.

7. Procédé selon l'une au moins des revendications 1 à 6 **caractérisé en ce que** la densité dₛ donnée au milieu hydraulique de séparation de l'étape (a) est préférentiellement choisie dans l'intervalle] 1 ,100 - 1 ,500 ].

8. Procédé selon l'une au moins des revendications 1 à 7 **caractérisé en ce que** le milieu hydraulique de séparation, à densité dₛ choisie comme seuil de séparation dans un intervalle de densité, compris dans ] 1,1 - 1,9 ] est formé d'eau et de composés minéraux solubles dans l'eau et/ou des composés minéraux insolubles ou faiblement solubles dans l'eau, de très faible dimension granulométrique, mis en suspension en quantité exactement contrôlée pour atteindre exactement la valeur choisie comme seuil de séparation pour la densité dₛ.

9. Procédé selon la revendication 8 **caractérisé en ce que** les composés minéraux solubles sont préférentiellement des sels de sodium, de potassium ou de magnésium.

10. Procédé selon la revendication 8 **caractérisé en ce que** les composés minéraux insolubles ou faiblement solubles dans l'eau sont des argiles pulvérulentes ou du carbonate de calcium pulvérulent.

11. Procédé selon l'une au moins des revendications 8 et 10 **caractérisé en ce que** la courbe granulométrique des particules des composés minéraux insolubles ou très peu solubles est comprise dans l'intervalle ] 0 µm - 5 µm].

12. Procédé selon l'une au moins des revendications 8, 10 et 11 **caractérisé en ce que** le diamètre médian des particules des composés minéraux insolubles ou très peu solubles, est compris dans l'intervalle ] 0 µm - 1 µm ].

13. Procédé selon l'une au moins des revendications 1 à 12 **caractérisé en ce que** la maille de libération des matériaux contaminants par fragmentation fine est choisie pour donner des particules de polymères à valoriser ayant leur plus grande dimension entre 5 et 50 mm et préférentiellement comprise entre 20 mm et 30 mm.

14. Procédé selon l'une au moins des revendications 1 à 13 **caractérisé en ce que** la séparation mécanique par criblage et/ou facteur de forme se fait selon une maille de criblage dont la plus grande dimension est d'au plus 30 mm et préférentiellement comprise entre 1 mm et 10 mm.

15. Procédé selon la revendication 14 **caractérisé en ce que** la séparation mécanique par criblage et/ou facteur de forme se fait dans un dispositif à mailles calibrées de séparation choisi dans le groupe constitué par les dispositifs à grilles vibrantes ou à surface de séparation cylindrique en rotation, à axe de révolution faiblement incliné.

16. Procédé selon l'une au moins des revendications 1 à 13 **caractérisé en ce que** la séparation aéraulique s'effectue par aspiration et/ou soufflage dans une zone de séparation comportant un seul moyen de séparation aéraulique, ce moyen de séparation comprenant lui même au moins deux zones spécifiques de séparation des matériaux à séparer, la première des zones spécifiques de séparation aéraulique étant la zone qui permet simultanément l'alimentation en matériaux à séparer dont le flux entrant est soumis au cours de son introduction dans ladite zone à une séparation aéraulique précoce et à une sortie immédiate du moyen de séparation par flux gazeux de la fraction des matériaux ultra légers à éliminer, l'autre zone spécifique de séparation aéraulique, munie d'une surface de criblage et également soumise à un flux gazeux, traitant le mélange des fractions des matériaux lourds et contaminants et des matériaux valorisâmes provenant de la première zone spécifique, le flux gazeux séparant et entraînant vers une sortie du séparateur aéraulique la fraction des matériaux valorisables, tandis que la fraction des matériaux lourds contaminants se sépare de la fraction valorisable par gravité et est éliminée du moyen de séparation aéraulique par une sortie appropriée.

17. Procédé selon la revendication 16, **caractérisé en ce que** le moyen de séparation aéraulique à deux zones spécifiques de séparation est choisi dans le groupe constitué par les séparateurs-nettoyeurs-calibreurs modulaires comportant des cribles et une double aspiration.

18. Procédé selon l'une au moins des revendications 1 à 16 **caractérisé en ce que** les matériaux valorisables provenant de l'étape c) sont soumis à une séparation aéraulique, par aspiration ou soufflage dans deux moyens de séparation aérauliques montés en série.

19. Procédé selon la revendication 18, **caractérisé en ce que** le premier moyen de séparation aéraulique reçoit le flux entrant de matériaux à séparer en fractions de matériaux contaminants et valorisables provenant de l'étape c), traite ce flux en deux fractions, de telle sorte que la fraction des matériaux ultra légers est extraite par la partie supérieure du premier moyen de séparation aéraulique, tandis qu'un mélange des fractions de matériaux lourds contaminants et des matériaux à valoriser est extraite par la partie basse dudit moyen de séparation aéraulique et que ledit mélange est introduit dans le deuxième moyen de séparation aéraulique, la fraction des matériaux lourds contaminants étant éliminée par la partie basse du deuxième moyen de séparation aéraulique tandis que la fraction des matériaux à valoriser est extraite de l'étape d).

20. Procédé selon la revendication 18, **caractérisé en ce que** le premier moyen de séparation aéraulique reçoit le flux entrant de matériaux à séparer en fractions de matériaux contaminants et valorisables provenant de l'étape c), traite le flux en deux fractions de telle sorte que la fraction des matériaux lourds contaminants est extraite par la partie basse dudit moyen de séparation aéraulique tandis qu'un mélange des fractions des matériaux ultra légers contaminants et des matériaux valorisables est extrait par la partie supérieure du premier moyen de séparation aéraulique, ledit mélange étant introduit dans le deuxième moyen de séparation aéraulique, la fraction des matériaux ultra légers contaminants étant éliminée par la partie supérieure du deuxième moyen de séparation aéraulique, tandis que la fraction des matériaux valorisables est extraite par la partie inférieure dudit moyen de séparation aéraulique.

21. Procédé selon l'une au moins des revendications 1 à 20 **caractérisé en ce que** la fraction des matériaux ultra légers contaminants extraite de la zone de séparation aéraulique est soumise à une étape supplémentaire de séparation par criblage selon leur plus grande dimension et/ou leur facteur de forme pour réaliser la séparation d'une fraction formée de matériaux de dimensions inférieures à celle de la maille du crible telles que des poudres de polymères, des déchets de fils et/ou de films et/ou de tissus, de petits volumes de mousses et pour récupérer tous les flocons de mousses ne pouvant passer à travers les mailles du crible et les valoriser par une opération appropriée.

22. Procédé selon l'une au moins des revendications 1 à 21, **caractérisé en ce que** des fractions préconcentrées et présélectionnées de matériaux polymères usagés à recycler dans les domaines de la plasturgie sont utilisées pour alimenter des procédés de séparation sélectifs permettant l'extraction de flux de matériaux polymères recyclables, rendus homogènes par leur composition.

## Patentansprüche

1. Verfahren für die Behandlung einer fragmentierten Mischung aus gebrauchten, in der Kunststoffindustrie in geringer Menge wieder verwertbaren Polymerstoffen, und kontaminierenden Stoffen, die aus der Zerkleinerung von dauerhaften Verbrauchsgütern am Ende ihres Lebenszyklus stammen, gleichzeitig bestehend aus:
- der Vorkonzentration einer Mischung aus gebrauchten, wieder verwertbaren Polymerstoffen, durch Teilelimination der in der Mischung enthaltenen kontaminierenden Stoffe, und
- der in der Mischung stattfindenden Vorauswahl einer Gruppe gebrauchter verwertbarer Polymerstoffe, die durch eine Dichte ]dmini - dmaxi] begrenzt wird, und sich innerhalb eines Dichtebereichs befindet, der durch die Grenzwerte ]0,850 - 1,900] der fragmentierten Materialmischung, die aus den Zerkleinerungsresten von dauerhafter Verbrauchsgütern stammt und das Ende ihres Lebenszyklus erreicht haben, begrenzt wird,
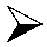 einer Fraktion an verwertbaren Stoffen, welche synthetische Polymerstoffe sind, unterschiedlich beschaffen und/oder zusammengesetzt und/oder geformt sind, und deren Dichte zwischen ]0,850 - 1,900] beträgt,
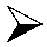 Fraktionen kontaminierender Stoffe, die aus mineralischen Stoffen und/oder metallischen Stoffen und/oder organischen Stoffen gebildet werden, und keine Polymere und/oder synthetischen Polymere in geschäumtem Zustand und insbesondere keine Schaumstoffe sind,
wobei das Verfahren besteht aus:
a) einer Trennungsphase in einem Hydraulikmedium dessen Dichte auf den Wert d festgelegt wird, welcher, die untere Grenze ausgenommen, aus einem Dichtebereich zwischen ]0,100 - 0,100] ausgewählt wird, wobei die obere Dichtegrenze dmaxi bildet, und für eine vorausgewählte, gebrauchte verwertbare Polymergruppe verwendet wird, und die untere Dichtgrenze dmini besagter Gruppe zwischen ]0,850 und ds] liegt. In das Hydraulikmedium wird die Mischung der gebrauchten, zu verwertenden Polymerstoffe eingefügt, so das eine verwertbare, vorkonzentrierte und vorab ausgewählte Polymergruppe mit einer Dichte von über dS und kontaminierende Stoffen entsteht, die zerlegt werden kann in eine Überstandsfraktion (a1) mit maximaler Dichte d, und eine dekantierende Fraktion (b2) mit den zu verwertenden, gebrauchten Polymerstoffen und mindestens der Fraktion der kontaminierenden Stoffe der fragmentierten Stoffmischung mit einer Dichte größer ds, die während des Verfahrens extrahiert wird.
**dadurch gekennzeichnet, dass** es der Reihe nach folgendes umfasst:
b) eine Trennphase der Überstandsfraktion (a1) aus Phase a) in einem Hydraulikmedium, dessen Dichte auf einen Wert von 1,100 festgelegt wird und die eine Überstandsfraktion (b1) mit einer Dichte von höchstens gleich 1,100 ergibt, bestehend aus einer fragmentierenden Fraktion extrem leichter und/oder gebrauchter synthetischer Polymere und zu verwertender, gebrauchter synthetischer Polymerstoffe sowie kontaminierender Stoffe, und einer dekantierenden Fraktion (b2) mit einer Dichte zwischen ]1,100 und ds], welche verwertbare gebrauchte Polymerstoffe und schwere kontaminierende Stoffe enthält, und welche eine andere Gruppe aus gebrauchten, verwertbaren, vorkonzentrierten und vorausgewählten Polymeren bildet, welche zwecks Verwertung aus dem Verfahren extrahiert werden.
c) eine Phase der Zerkleinerung der Fraktion (b1) der zu verwertenden aus Phase b) stammenden Polymerstoffe, und am freisetzenden Maschengewebe kontaminierende Stoffe, die an den Fragmenten der Fraktion der zu verwertenden Stoffe haften oder angefügt sind.
d) eine Phase der mechanischen Trennung durch Größensortierung und/oder Formfaktor, oder der lufttechnischen Trennung der Fraktion der zu verwertenden synthetischen Polymerstoffe aus Zerkleinerungsphase c), um zumindest zum Teil die Fraktion (d2) der bei der Zerkleinerung freigesetzten kontaminierenden Stoffe und die geschäumten Polymerstoffe zu beseitigen und daraus die Fraktion (d1) der verwertbaren Materialien zu extrahieren, welche die gewünschte, nach einer verwertbaren Stoffgruppe vorkonzentrierte und vorausgewählte, durch die Dichten dmini = 0,850 (mit Ausnahme der unteren Grenze) und dmaxi = 1,100, begrenzten, Kontaminationsstoffe enthaltende, Mischung bilden.
e) eine Phase der Benetzung der aus Phase d) stammenden Fraktion mit Wasser, um die Dichte des vorhandenen Kontaminanten "Holz" zu erhöhen.
f) eine Phase der Trennung der Fraktion aus Phase e) in einem Hydraulikmedium, dessen Dichte auf den Wert 1,100 festgelegt ist, was eine Überstandsfraktion (f) aus gebrauchten, zu verwertenden synthetischen Polymerstoffen ergibt, so dass eine vorkonzentrierte und vorausgewählte Gruppe von gebrauchten, verwertbaren synthetischen Polymerstoffen entsteht, die durch die Dichten dmini = 0,850 (untere Grenze ausgeschlossen) und dmaxi = 1,100 begrenzt ist, und einen Rohstoff für ein Feintrennverfahren für vorhandene Polymere entsprechend ihrer Zusammensetzung mit dem Ziel des Recyclings dieser Stoffe, sowie eine zu beseitigende dekantierende Fraktion (f2), die hauptsächlich aus dem Kontaminanten "Holz" besteht.

2. Verfahren nach Patentanspruch 1, **dadurch gekennzeichnet, dass** die Fraktion (a1) mit einer maximalen Dichte d aus einer Mischung von "n" Gruppen einheitlicher trennbarer Polymerstoffe gebildet wird, wobei jede Gruppe eine eigene Dichte ]dmini (n) - dmaxi (n)] hat und "n" ganze Werte zwischen 1 und der Anzahl des wiederzugewinnenden Polymertyps sind.

3. Verfahren nach Anspruch 1, **dadurch gekennzeichnet, dass** die dekantierende Fraktion (a2) von Phase (a) deren Dichte zwischen ]ds - 1,900] liegt, definitiv beseitigt wurde.

4. Verfahren nach Anspruch 1, **dadurch gekennzeichnet, dass** die dekantierende Fraktion (a2) aus Phase (a) unabhängig von der Fraktion (a1) eine Verwertungsbehandlung durchläuft mit Trennphasen nach Dichte, um die in besagter Fraktion enthaltenen gebrauchten, verwertbaren Polymerstoffe mit einer Dichte zwischen ]ds - 1,900] nach Dichtegruppen ]dmini (n) - dmaxi (n)] zu sammeln, wobei "n" für ganze Werte zwischen 1 und der Anzahl des wiederzugewinnenden Polymertyps steht.

5. Verfahren nach mindestens einem der Ansprüche 1 bis 4, **dadurch gekennzeichnet, dass** die dekantierende Fraktion (b2) aus Phase (b) mit Dichten zwischen ]1,1 - ds] beseitigt ist.

6. Verfahren nach mindestens einem der Ansprüche 1 bis 4, **dadurch gekennzeichnet, dass** die dekantierende Fraktion (b2) unabhängig von Fraktion (b1) eine Verwertungsbehandlung nach Phasen der Dichtetrennung durchläuft, um die in besagter Fraktion vorhandenen gebrauchten verwertbaren polymeren Stoffe mit einer Dichte zwischen ]1,1 - d3] nach Dichtegruppen ]dmini (n) - dmaxi (n)] zu sammeln, wobei n für ganze Zahlen zwischen 1 und der Anzahl des wiederzugewinnenden Polymertyps steht.

7. Verfahren nach mindestens einem der Ansprüche 1 bis 6, **dadurch gekennzeichnet, dass** die Dichte ds des Trennhydraulikmediums aus Phase (a) vorzugsweise aus einem Dichtebereich von ]1,100 - 1,500] ausgewählt wird.

8. Verfahren nach einem der Ansprüche 1 bis 7, **dadurch gekennzeichnet, dass** das Trennhydraulikmedium mit Dichte ds, das als Grenzwert der Trennung in einem Dichtebereich zwischen ]1,1 - 1,9] ausgewählt wird, aus Wasser und mineralischen wasserlöslichen Verbindungen und/oder mineralischen in Wasser unlöslichen oder gering löslichen Verbindungen mit geringer Korngröße gebildet wird, und in einer genau kontrollierten Menge aufgeschlämmt wird, um genau den Wert zu erzielen, der als Grenzwert für Dichte ds ausgewählt wurde.

9. Verfahren nach Anspruch 8, **dadurch gekennzeichnet, dass** die löslichen mineralischen Verbindungen vorzugsweise Natrium-, Kalium- oder Magnesiumsalze sind.

10. Verfahren nach Anspruch 8, **dadurch gekennzeichnet, dass** die mineralischen, in Wasser unlöslichen oder gering löslichen Verbindungen pulverförmige Tone oder pulverförmiges Calciumcarbonat sind.

11. Verfahren nach mindesten einem der Ansprüche 8 und 10, **dadurch gekennzeichnet, dass** die Granulometrie-Kurve der Partikel der in Wasser unlöslichen oder geringfügig löslichen mineralischen Verbindungen zwischen ] 0 µm und 5 µm] liegt.

12. Verfahren nach mindesten einem der Ansprüche 8, 10 und 11, **dadurch gekennzeichnet, dass** der mittlere Durchmesser der Partikel der unlöslich oder gering löslichen mineralischen Verbindungen zwischen ] 0 µm und 1 µm] liegt.

13. Verfahren nach mindestens einem der Ansprüche 1 bis 12, **dadurch gekennzeichnet, dass** die Maschengröße für die Freisetzung der kontaminierenden Stoffe durch Feinfragmentierung so ausgewählt wird, dass verwertbare Polymerpartikel mit einer maximalen Größe von 5 bis 50 mm, vorzugsweise aber von 20 und 30 mm erhalten werden.

14. Verfahren nach mindestens einem der Ansprüche 1 bis 13, **dadurch gekennzeichnet, dass** die mechanische Trennung durch Siebung und/oder Formfaktor mit einer Maschenweite erfolgt, deren größte Größe bei 30 mm, vorzugsweise aber zwischen 1 mm und 10 mm liegt.

15. Verfahren nach Anspruch 14, **dadurch gekennzeichnet dass** die mechanische Trennung durch Sieben und/oder Formfaktor in einer Vorrichtung mit kalibrierter Trennmaschenweite erfolgt, welche aus einer Gruppe von Vorrichtungen ausgewählt wird, die aus Rüttelgittern oder einer zylindrischen drehbaren Trennfläche und einer leicht geneigten Umdrehungsachse besteht.

16. Verfahren nach mindestens einem der Ansprüche 1 bis 13, **dadurch gekennzeichnet, dass** die lufttechnische Trennung durch Ansaugung und/oder Abblasen in einem Trennbereich erfolgt, der eine einzige lufttechnische Trennvorrichtung umfasst, wobei diese Trennvorrichtung mindestens zwei spezifische Trennbereiche für die zu trennenden Stoffe aufweist, und der erste spezifische lufttechnische Trennbereich der Bereich ist, der das Zuführen des trennenden Materials ermöglicht, wobei dessen Eingangsströmung in der Einlassphase einer lufttechnischen Vortrennung unterzogen wird, aber gleichzeitig auch das Austreten der Fraktion der zu beseitigenden, extrem leichten Stoffe durch Gasstrom aus der Trennvorrichtung ermöglicht, und der andere spezifische lufttechnische Trennbereich mit einer Siebfläche versehen ist, auf welche ebenfalls ein Gasstrom einwirkt und wo die Mischung der Fraktionen der schweren und kontaminierenden Stoffe und der verwertbaren, aus dem ersten spezifischen Bereich kommenden Stoffe behandelt werden, wobei der das verwertbare Material trennende Gasstrom zu einem Ausgang der lufttechnischen Trennvorrichtung führt, und die Fraktion der schweren kontaminierenden Stoffe von der verwertbaren Fraktion durch Schwerkraft getrennt und mittels der lufttechnischen Trennvorrichtung durch Ableitung zum geeigneten Ausgang beseitigt wird.

17. Verfahren nach Anspruch 16, **dadurch gekennzeichnet, dass** die lufttechnische Trennvorrichtung mit zwei spezifischen Trennbereichen aus einer Gruppe von Vorrichtungen ausgewählt wird, die zu modularen Trennvorrichtungen-Reinigern-Kalibiergeräten gehört und Siebe mit doppelte Ansaugung umfasst.

18. Verfahren nach einem der Ansprüche 1 bis 16, **dadurch gekennzeichnet, dass** die verwertbaren Stoffe aus Phase c) einer lufttechnischen Trennung durch Ansaugen oder Abblasen in zwei reihengeschalteten lufttechnischen Trennvorrichtungen unterzogen werden.

19. Verfahren nach einem der Ansprüche 18, **dadurch gekennzeichnet, dass** die erste lufttechnische Trennvorrichtung einen Eingangsstrom aus Stoffen aufnimmt, die in Fraktionen von kontaminierenden Stoffen und verwertbaren Stoffen aus Phase c) unterteilt sind, und diesen aus zwei Fraktionen bestehenden Strom so behandelt, dass die Fraktion der extrem leichten Stoffe aus dem oberen Bereich der ersten lufttechnischen Trennvorrichtung extrahiert wird, wohingegen eine Mischung der Fraktionen bestehend aus schweren kontaminierenden Stoffen und zu verwertenden Stoffen durch den unteren Teil besagter lufttechnischer Vorrichtung extrahiert wird, und besagte Mischung in die zweite lufttechnische Vorrichtung eingeführt wird, wobei die Fraktion der schweren kontaminierenden Stoffe durch den unteren Teil der zweiten lufttechnischen Vorrichtungen beseitigt wird, während die Fraktion der zu verwertenden Stoffe aus Phase d) extrahiert wird.

20. Verfahren nach einem der Ansprüche 18, **dadurch gekennzeichnet, dass** die erste lufttechnische Trennvorrichtung eine Eingangsstrom bestehend aus Stoffen aufweist, die in Fraktionen von kontaminierenden Stoffen und verwertbaren Stoffen aus Phase c) zu trennen sind, und diesen aus zwei Fraktionen bestehenden Strom so behandelt, dass die Fraktion mit schweren kontaminierenden Stoffen durch den unteren Teil der lufttechnischen Trennvorrichtung extrahiert wird, während eine Mischung der Fraktionen bestehend aus extrem leichten kontaminierenden Stoffen und verwertbaren Stoffen über den oberen Teil der ersten lufttechnischen Trennvorrichtung extrahiert wird, wobei die Mischung in die zweite lufttechnische Vorrichtung eingeleitet wird, und die Fraktion mit den extrem leichten kontaminierenden Stoffen über den oberen Teil der zweiten lufttechnischen Vorrichtung beseitigt wird, währen die Fraktion der verwertbaren Stoffe über den unteren Teil besagter lufttechnischer Vorrichtung extrahiert wird.

21. Verfahren nach mindestens einem der Anspruche 1 bis 20, **dadurch gekennzeichnet, dass** die Fraktion der extrem leichten kontaminierenden Stoffe, die aus dem lufttechnischen Bereich extrahiert wurde, eine zusätzliche Trennphase durch Siebung nach der größten Größe und/oder Formfaktor durchläuft, um die Trennung einer Fraktion bestehend aus kleineren Stoffen als die Maschenweite des Siebs zu ermöglichen wie z.B. Polymerstaub, Faden und/oder Folien und/oder Gewebeabfälle, und kleine Schaumstoffe und um die Wiedergewinnung von Schaumstoffflocken zu ermöglichen, die nicht durch die Maschen des Siebes passen und diese durch einen geeigneten Vorgang wieder zu verwerten.

22. Verfahren nach mindestens einem der Ansprüche 1 bis 21, **dadurch gekennzeichnet, dass** die vorkonzentrierten, vorausgewählten Fraktionen gebrauchter, zu recycelnder Polymerstoffe in der Kunststoffindustrie für selektive Trennverfahren benutzt werden, die das Extrahieren von recyclingfähigen Strömen aus einheitlich zusammengesetzten Polymerstoffen ermöglichen.

## Claims

1. A method for processing a mixture of fragmented materials consisting of reusable used polymer materials which can be recycled in small quantities, in the fields of plastics processing industry and contaminant materials resulting from the grinding of consumer durables having reached the end of their lives, simultaneously consisting in:
▪ pre-concentrating a mixture of reusable used polymer materials by partially removing the contaminant materials present in the mixture and
▪ pre-selecting, in the mixture, at least one group of reusable used polymer materials defined by a density range [dₘᵢₙᵢ-dₘₐₓ] falling within a density range defined by the [0.850 to 1.900] limits from the mixture of fragmented materials resulting from the grinding of consumer durables having reached the end of their lives comprising:
→ a fraction of reusable materials which are synthetic polymer materials, having various nature and/or compositions and/or form factors, the densities of which are within the [0.850-1.900] range,
→ fractions of contaminant materials consisting of mineral materials and/or metallic materials and/or organic materials other than polymer materials and/or synthetic polymer materials in an expanded state, in particular foams,
with said method comprising:
a) a step of separation in a hydraulic medium, the density of which is set to a value dₛ selected in a density range, not including the lower limit, between [1.100 and 1.900], with dₛ being the upper density limit dₘₐₓ selected for a group of reusable used polymers to be pre-selected, whereas the lower density limit dₘᵢₙᵢ of said group ranges between [0.850 and dₛ], a hydraulic medium wherein the mixture of pre-concentrated and pre-selected reusable used polymer materials forming a group of reusable polymers having higher densities dₛ and contaminant materials is introduced, which separates into a supernatant fraction (a1) having a maximum density dₛ and a settling fraction (a2) containing reusable used polymer materials and at least partly the fraction of the contaminant materials from the mixture of the fragmented materials having a density above dₛ, extracted from the process,
and **characterised in that** it comprises, in a sequence:
b) a step of separation of the supernatant fraction (a1) from step a) in a hydraulic medium, the density of which is adjusted to a value of 1.100 giving a supernatant fraction (b1) having a density of at most 1.100 which consists of a fraction of ultra-light and/or expanded used synthetic polymer materials and reusable used synthetic polymer materials provided in a fragmented form as well as contaminant materials and a settling fraction (b2) having a density between [1.000 and dₛ] containing reusable used polymer materials and heavy contaminant materials constituting another group of pre-concentrated and pre-selected reusable used polymers, extracted from the process,
c) a step of grinding the fraction (b1) of the reusable polymer materials originating from the step b), to the liberation mesh of the contaminant materials included in, adhering to or assembled with the fragments of the fraction of the reusable polymer materials,
d) a step of mechanical separation by screening according to dimensions and/or form factor, or aeraulics, of the fraction of the reusable synthetic polymer materials originating from step c) of grinding so as to, at least partly, remove therefrom the fraction (d2) of the contaminant materials released upon grinding and the materials and the expanded polymer materials and extracting therefrom the fraction (d1) of the reusable materials which form the desired, pre-concentrated and pre-selected mixture according to a group of reusable materials, defined by the densities dₘᵢₙᵢ=0.850, (excluding the lower limit) and dₘₐₓᵢ=1.100 still containing contaminants.
e) a step of wetting the fraction originating from step d) using water in order to increase the density of the present "wood" contaminant.
f) a step of separating the fraction originating from step e) in a hydraulic medium, the density of which is set to the value 1.100, giving a supernatant fraction (f1) of reusable used synthetic polymer materials, forming a pre-concentrated and pre-selected group of reusable used synthetic polymer materials, defined by the densities dₘᵢₙᵢ=0.850 (excluding the lower limit) and dₘₐₓᵢ=1.100 constituting a raw material for a fine separation process of the polymers present according to the composition thereof, for recycling purposes, and a settling fraction (f2) to be removed which essentially contains the "wood" contaminant.

2. A method according to claim 1, **characterized in that** the fraction (a1) having a maximum density dₛ is formed of a mixture of "n" groups of separable homogeneous polymer materials, with each group having its own density [dₘᵢₙᵢ(n)-dₘₐₓᵢ(n)], with "n" taking integer values between 1 and the number of types of polymer to be recovered.

3. A method according to claim 1, **characterized in that** the settling fraction (a2) of step (a), the densities of which are in the [dₛ-1.900] range, is permanently eliminated.

4. A method according to claim 1, **characterized in that** the settling fraction (a2) of step (a) undergoes, independently of the fraction (a1), an upgrading treatment in steps of separation per density for collecting the reusable used polymer materials present in said fraction, the densities of which are in the [dₛ-1.900] range, according to [dₘᵢₙᵢ(n)-dₘₐₓᵢ(n)] density groups, with "n" taking integer values between 1 and the number of types of polymer to be recovered.

5. A method according to at least one of claims 1 to 4, **characterized in that** the settling fraction (b2) of step (b), the densities of which are in the [1.1-dₛ] range, is eliminated.

6. A method according to at least one of claims 1 to 4, **characterized in that** the settling fraction (b2) undergoes, independently of the fraction (b1), an upgrading treatment in steps of separation per density for collecting the reusable used polymer materials present in said fraction, the densities of which are in the [1.1-dₛ] range, according to [dₘᵢₙᵢ(n)-dₘₐₓᵢ(n)] density groups, with "n" taking integer values between 1 and the number of types of polymer to be recovered.

7. A method according to at least one of claims 1 to 6, **characterized in that** the density dₛ given to the hydraulic separation medium of step (a) is preferably selected within the [1.100-1.500] range.

8. A method according to at least one of claims 1 to 7, **characterized in that** the hydraulic separation medium, for a density dₛ selected to be the separation threshold in a [1.1-1.9] density range, is composed of water and water soluble inorganic compounds and/or water insoluble or sparingly soluble inorganic compounds, with a very small particle size, suspended in an exactly controlled amount so as to precisely obtain the value selected to be the separation threshold for the density dₛ.

9. A method according to claim 8, **characterized in that** the soluble inorganic compounds are preferably sodium, potassium or magnesium salts.

10. A method according to claim 8, **characterized in that** the water insoluble or sparingly soluble inorganic compounds are powdered clays or calcium carbonate powder.

11. A method according to at least one of claims 8 and 10, **characterized in that** the particle size curve of the particles of the insoluble or sparingly soluble mineral compounds is in the [0µm-5µm] range.

12. A method according to at least one of claims 8, 10 and 11, **characterized in that** the median diameter of the particles of insoluble or sparingly soluble mineral compounds, is in the [0µm-1µm] range.

13. A method according to at least one of claims 1 to 12, **characterized in that** the contaminant materials fine fragmentation liberation mesh is so selected as to give reusable polymers particles having their largest dimension between 5 and 50mm and preferably between 20mm and 30mm.

14. A method according to at least one of claims 1 to 13, **characterized in that** the mechanical separation by screening and/or form factor is carried out according to a screening mesh, the largest dimension of which is at most 30mm and preferably between 1mm and 10mm.

15. A method according to claim 14, **characterized in that** the mechanical separation by screening and/or form factor is carried out in a calibrated-mesh separation device selected from the group consisting of oscillating grate devices, or devices with a rotary cylindrical separation surface, with a slightly inclined axis of revolution.

16. A method according to at least one of claims 1 to 13, **characterized in that** the aeraulic separation is carried out by suction and/or blowing in a separation zone comprising a single aeraulic separation means, with such separation means itself comprising at least two specific zones for separating the materials to be separated, with the first specific aeraulic separation zone being the zone which simultaneously enables the supply with the materials to be separated, the incoming stream of which is subjected, when introduced into said zone, to an early aeraulic separation and to the immediate release of the fraction of ultra-light materials to be eliminated from the separation means in a gaseous stream, and with the other specific aeraulic separation zone, provided with a screening surface and also subjected to a gaseous stream, processing the mixture of fractions of heavy and contaminant materials and reusable materials originating from the first specific zone, with the gaseous stream separating and leading the fraction of reusable materials towards an outlet of the aeraulic separator, whereas the fraction of heavy contaminant materials separates from the reusable fraction by gravity and is eliminated from the aeraulic separation means through a suitable outlet.

17. A method according to claim 16, **characterized in that** the aeraulic separation means with two specific separation zones is selected from the group consisting of modular separator-cleaner-sizers comprising screens and a double suction.

18. A method according to at least one of claims 1 to 16, **characterized in that** the reusable materials originating from step c) are subjected to an aeraulic separation by suction or blowing in two aeraulic separation means mounted in series.

19. A method according to claim 18, **characterized in that** the first aeraulic separation means receives the incoming flow of materials to be separated in fractions of contaminant reusable materials originating from step c), processes such stream in two fractions, so that the fraction of ultra-light materials is extracted through the upper part of the first aeraulic separation means, whereas a mixture of the fractions of heavy contaminant materials and reusable materials is extracted through the lower part of said aeraulic separation means, and whereas said mixture is introduced into the second aeraulic separation means, with the fraction of heavy contaminant materials being removed through the lower part of the second aeraulic separation means whereas the fraction of the reusable materials is extracted from step d).

20. A method according to claim 18, **characterized in that** the first aeraulic separation means receives the incoming flow of materials to be separated in fractions of contaminant and reusable materials from step c) processes the stream in two fractions such that the fraction of heavy contaminant materials is extracted through the lower part of said aeraulic separation means, whereas a mixture of the fractions of the ultra-light contaminant materials and the reusable materials is extracted through the upper part of the first aeraulic separation means, with said mixture being introduced into the second aeraulic separation means, with the fraction of ultra-light contaminant materials being removed through the upper part of the second aeraulic separation means, whereas the fraction of the reusable materials is extracted through the lower part of said aeraulic separation means.

21. A method according to at least one of claims 1 to 20, **characterized in that** the fraction of the ultra-light contaminant materials extracted from the aeraulic separation zone is subjected to an additional step of separation by screening according to their largest dimension and/or their form factor, so as to perform the separation of a fraction consisting of materials with dimensions smaller than those of the sieve mesh such as polymer powders, yarns and/or films and/or fabrics wastes, small volumes of foams and to recover all the foam flakes that cannot pass through the mesh of the sieve and upgrade same through an appropriate operation.

22. A method according to at least one of claims 1 to 21, **characterised in that** pre-concentrated and pre-selected fractions of used polymer materials to be recycled in the field of plastics processing industry are used for feeding selective separation methods enabling the extraction of streams of recyclable polymer materials, made homogeneous in composition.
